Europäisches Patentamt

European Patent Office

Office européen des brevets

(19)

(11) Publication number: **0 122 870**

**A2**

(12) # EUROPEAN PATENT APPLICATION

(21) Application number: **84630061.4**

(22) Date of filing: **17.04.84**

(51) Int. Cl.³: **G 06 F 3/04**

(30) Priority: **18.04.83 US 486427**

(43) Date of publication of application:
**24.10.84 Bulletin 84/43**

(84) Designated Contracting States:
**AT BE CH DE FR GB IT LI LU NL SE**

(71) Applicant: **Milligan, James Hayden**
**821 Cannon Avenue**
**Shoreview Minnesota 55112(US)**

(72) Inventor: **Milligan, James Hayden**
**821 Cannon Avenue**
**Shoreview Minnesota 55112(US)**

(74) Representative: **Waxweiler, Jean et al,**
**OFFICE DENNEMEYER S.à.r.l. 21-25 Allée Scheffer**
**P.O.Box 41**
**L-2010 Luxembourg(LU)**

(54) Enhanced distance data transmission system.

(57) A logic system between parallel channel end devices such as a computer and peripheral device. A level converter converts parallel digital signals from the external devices to levels for the system. A comparator samples the converted levels. Multiplex serialization of the parallel signals in initiated by comparator action and proceeds under count control. Sampled converted levels are also used to generate mode signals which are used to select predetermined logic patterns within the system, and to select varied lengths of count for message serialized for transmission from one end of the logic system to the other. The serialized messages received at the other end are converted to parallel form by a shift register under count action governed by the mode of transmission. A sampling of the mode intelligence transmitted is used to set the receiving end in the same mode as the sending end. Buffer registers are provided for temporary storage of received messages. Special circuitry is adapted to generate signals from outputs of the external devices and turn those signals back to the external devices to enhance rapid data transfer. And logic circuitry is employed which provides the sending end of the system with intelligence on the availability of buffer storage space at the receiving end.

./...

EP 0 122 870 A2

Croydon Printing Company Ltd

FIG. 1

_-1-_

ENHANCED DISTANCE DATA TRANSMISSION SYSTEM

Background of the Invention

1.  Field of the Invention

This invention relates generally to electronic data processing, and pertains more particularly to a system for transmitting digital data over a longer distance than conventional data channels permit.  In its most preferred form, this invention contemplates temporary storage of data and special logic to control or facilitate passage of the same to an external device.

2.  Description of the Prior Art

Conventional wired data channels vary in length, the length usually being limited to a maximum of about 200 feet.  Basically, the distance must be relatively short owing to two factors:  (1) circuit limitations and (2) timing limitations.

(1)  Circuit limitations occur from the attenuation of a signal as it progresses over a long wire, and also from skewing wherein several signals propagating in parallel may not reach their destination simultaneously.

(2)  Timing limitations, on the other hand, result from the adoption of short propagation intervals.  More specifically, where a set of signals must first propagate the entire length of a wire channel and a response signal propagate back over a second wire channel before further transmission can take place, the sum of these propagation times becomes greater than the interval at which the peripheral unit must be responded to, and a loss of data results.

Serialization of the data transmission has been a step in the proper direction as far as reducing the above-mentioned circuit limitations. Also, as far as parallel lines are concerned, channel extenders have been devised, these being long line drivers without utilizing serialization; but use of these results in a slowdown of data transfer which can trigger an error condition in a time sequence of demand receiver.

### Summary of the Invention

My invention provides a system for transmitting or transferring digital data over relatively long distances, easily on the order of 0.6 kilometers (2000 feet), and even longer distances, using conducting means, or even radio transmission, if desired. Circuit limitations hereinbefore mentioned are minimized by serializing the data so that all data travels sequentially or over the same path, and preferably by additionally employing suitable modulation techniques to enable the receiver to react to small amplitude signals. In this latter regard, it is preferred that phase modulation be utilized; however, other modulation techniques can be employed depending on the media of transmission.

In overcoming time constraints that have been alluded to, a preferred aspect of the invention is to enable transfer of data in the absence of a reply acknowledgment from an external receiver. In this regard, it is within the purview of my invention to employ buffered data banks at the receiving end which function as a temporary storage medium before the data is passed to an external receiver. Further, it is within the purview of my invention to generate reply acknowledgment signals for operation of an external sender and to do that entirely within my logic system.

- 3 -

The invention provides logic circuitry that can be incorporated into and used with data processing equipment currently on the market and which equipment need not actually be modified to any degree in order to benefit from the teachings of my invention. Also, the invention preserves system integrity, enabling the transfer of digital data from one vantage point to another without loss or sacrifice of reliability.

Briefly, my invention envisages the conversion of the data pulses from a conventional computer to pulses having different and more readily processed voltages. After multiplexing to provide serialization of the digital data, the pulses are phase-modulated and then forwarded over a first transmission conduit (e.g., channel) to a receiving station located at a vantage point that can be significantly farther away from the computer end of the transmission than possible heretofore. At the receiving station or end of my logic, I employ a phase demodulator and a means for changing the serially received data back to its original form, both as to amplitude and parallelism.

Buffered storage in the form of a plurality of shift or buffer registers is provided, although such buffer storage can be by-passed when circumstances so dictate. These registers are controlled in a manner so that no data will be transmitted unless the registers at the receiving end of my logic can accommodate the data upon receipt. Only a two-bit code need be received before a signal is sent back to the transmitting end of my logic which causes what will be termed an implied acknowledgment signal to be generated, as may be necessary to satisfy the requirements for release of data by an external device at the sending end of my logic. The control circuitry for the buffer registers insures that data will be transmitted only as long as they are able to receive and handle such data.

Consequently, my system obviates the need for an external receiving device to send an acknowledgment signal indicating its receipt of data. Stated somewhat differently, as long as buffered space exists and can handle the transmitted data, data can continue to be transmitted without interruption or delay.

Further, a preferred but specialized aspect of my invention is that of reducing the number of bits in certain messages or internal acknowledgments transmitted, while at the same time generating at the receiving end the input to an external device of non-transmitted bits, thereby saving time.

Another preferred but specialized aspect of my invention is that of promptly modifying, under some conditions, some of the output signals of an exterior device (e.g., peripheral unit or computer) into signals accepted by the outputting exterior device, and then directing the modified signals back to the exterior device, without transmission between the exterior devices. This technique may be used at both ends and is preferably used where the controlled buffered storage of my invention is employed. It significantly enhances speed of data transfer. While the approach may be looked upon as causing a "lie" to be sent to the exterior devices, even a "lie" generated from their own output, the circuitry controls employed render any such "lie" innocuous and, in fact, highly beneficial in instances where the external device is programmed to require some input before it will release or accept data.

## Brief Description of the Drawing

Figure 1 is a simplified diagram depicting my logic circuitry within dashed lines, with elements of the sending logic circuitry in the upper part of the Figure and elements of the receiving logic circuitry in the lower part thereof, although preferred practice of my invention envisages both the sending and receiving circuitry as being present and selectively interconnected and used at both ends;

Figure 2 is a detailed diagram showing parallel inputs from a sending device (e.g., computer) to converters LC and then to multiplexers MP;

Figure 3 is a diagram of a portion of sending circuitry, including a crystal clock CC, counting means CT, a phase modulator PM and driver for transmission DT;

Figure 4 is a diagram of a portion of sending circuitry, showing sample inputs 10L through 17L taken from Figure 2, plus two banks of registers RG1 and RG2 and comparator means CP;

Figure 5 is a diagram of a portion of sending circuitry, with DA through DE inclusive coming from data lines of Figure 2 after level conversion; this circuitry is useful in ultimately establishing a mode of transmission which may reduce the number of data bits of a message transmitted to the receiving circuitry;

Figure 6 is a diagram illustrating parts of sending circuitry used in establishing the mode of data transmission;

Figure 7 is a diagram of specialized circuitry for effecting a reduced bit or 6-bit transmission, particularly an acknowledgment;

Figure 8 is a diagram of specialized circuitry operable under certain circumstances to create or generate a reply signal, or acknowledgment, or request, for an adjacent external device even though none is transmitted from the opposite end of my circuitry;

Figure 9 is a diagram particularly illustrating my receiving circuitry, including a receiver R, phase demodulator PD, shift register means SR1 and SR2, and counter RC;

Figure 10 is a diagram of a portion of circuitry particularly operable for receiving, with sampling inputs E and F employed, among other things, to establish the mode of operation of the receiving circuitry to conform to that of the sending circuitry;

Figure 11 is a diagram of my circuitry particularly operable for receiving, and illustrates a first or main bank of registers BR1, a plurality of banks of buffer registers (partially broken away to reduce duplication) labeled BR2, BR3 and BR12, and buffer register control inputs (partially broken away) labeled G2, G3, and G12;

Figure 12 is a diagram of an alternate form circuitry for the circuitry illustrated at the lower left of Figure 4;

Figure 13 is a diagram of alternate form circuitry for my circuitry at the upper left in Figure 10; and

Figure 14 is a diagram of alternate form circuitry for interposing between C12 and exit line 12 in Figure 11.

## Explanation of Disclosure Format

Symbols in the drawing are used for more ready comprehension of the logic of my circuitry; and a table of symbol definitions is set forth in the next subsection of this specification. Capital alphabet letters and numbers below 100 are employed for symbol purposes, as well as combinations of capital letters and numbers.

Numbers 100 and higher, with or without low case alphabet letters following the number, are solely to key discussion in the specification to parts of the drawing.

Further, illustrative commercially available logic components will be set forth in the specification. They are intended solely to present full disclosure of an illustrative embodiment. Unless otherwise stated, all such references are to components available from Motorola, Inc., for example, as part of their MECL family described in their publication "The Semiconductor Library", Series A, Volume IV, copyright 1974, here incorporated by reference. For brevity, such references to Motorola's components will be placed in parentheses, thusly "(MC10101)", meaning Motorola's quad OR/NOR gate MC10101.

However, my invention is not dependent on the specifics of the illustrated circuitry nor the specifics of the illustrated components. The essence of my invention is in the principles of the logic employed, including the broadest aspect thereof; and these logic principles, while discussed with reference to specific components and circuits, are not limited thereto. The principles of my logic can be implemented in circuits quite different from, and employing components different from, those illustrated, without departing from the broad essence of the teachings set forth herein.

In the most preferred use of my invention, the entire circuitry making up the logic for both sending and receiving is present in a box or assembly at each end of the conduit for transmission. For convenience, the sending and receiving logic at one end (e.g., adjacent a computer) can be referred to as the "A" end, whereas the assembly of sending and receiving logic at the other end (e.g., adjacent a peripheral device) can be referred to as the "B" end.

Within the internal logic of my illustrated specific embodiment, a digital zero is handled as a minus one volt, whereas a digital one is minus two volts. However, the principles of my logic may be employed with any other appropriate electronic significance for conveying the digital data.

As a convention in discussing the various modes of operation for my logic, the illustrated specific embodiment will refer to three different modes, explained as follows:

01 is Mode 1, where random messages and full multiplexing are used, e.g., for a 24-bit communication. This can be used for messages or acknowledgments both to and from each "external" device such as a computer and a peripheral device.

10 is Mode 2, where WRITE messages of, for example, 12 bits are sent internally within my logic system from the computer to the peripheral and 6-bit internal replies or acknowledgments are sent back.

11 is Mode 3, where READ messages (e.g., 12 bits) are sent internally within my logic system between external devices, for example, from a peripheral device to a computer.

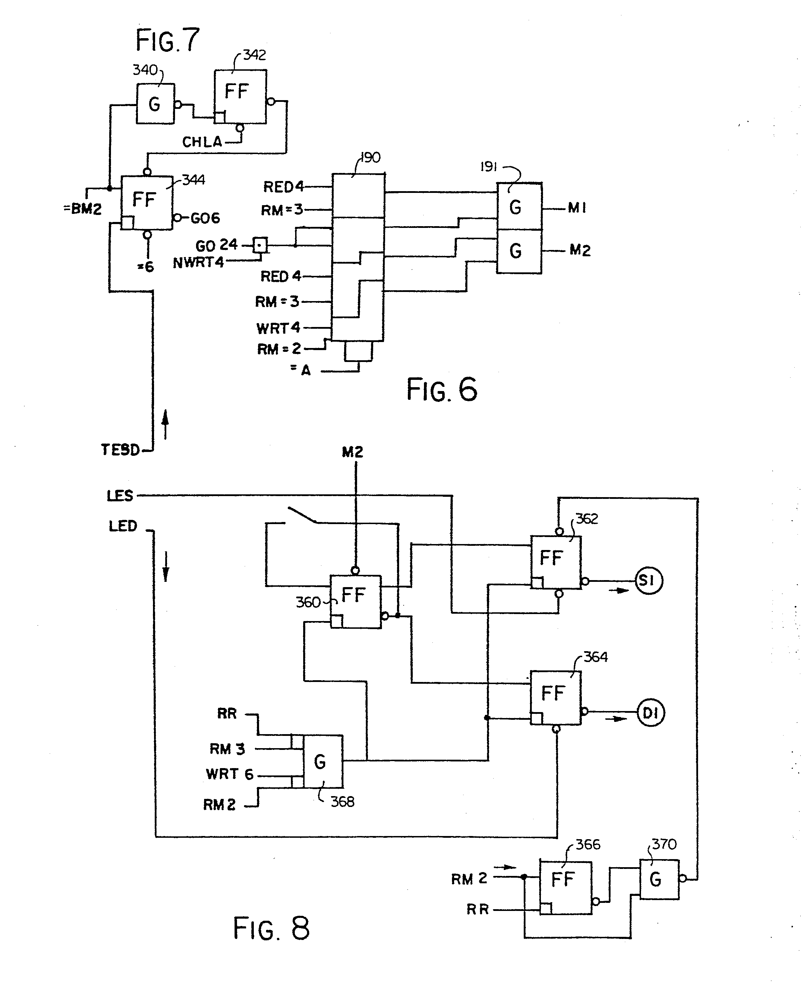

Thus, while outgoing lines M1 and M2 in Figure 6 may superficially suggest that Mode 1 per se arises from a signal on line M1, the fact is that the combination of the pulse voltage logic on lines M1 and M2 establishes the "Mode", including Mode 3, and the labeling is done solely for glance recognition.

My 6 and 12 bit messages may lack--or need not include--service and data signals. To satisfy the needs of the computer and peripheral devices which require those signals for operation, I use the smaller bit messages within my logic to generate appropriate service and data signals as may be required to satisfy the operation of the external devices.

Table of Symbols in Drawing

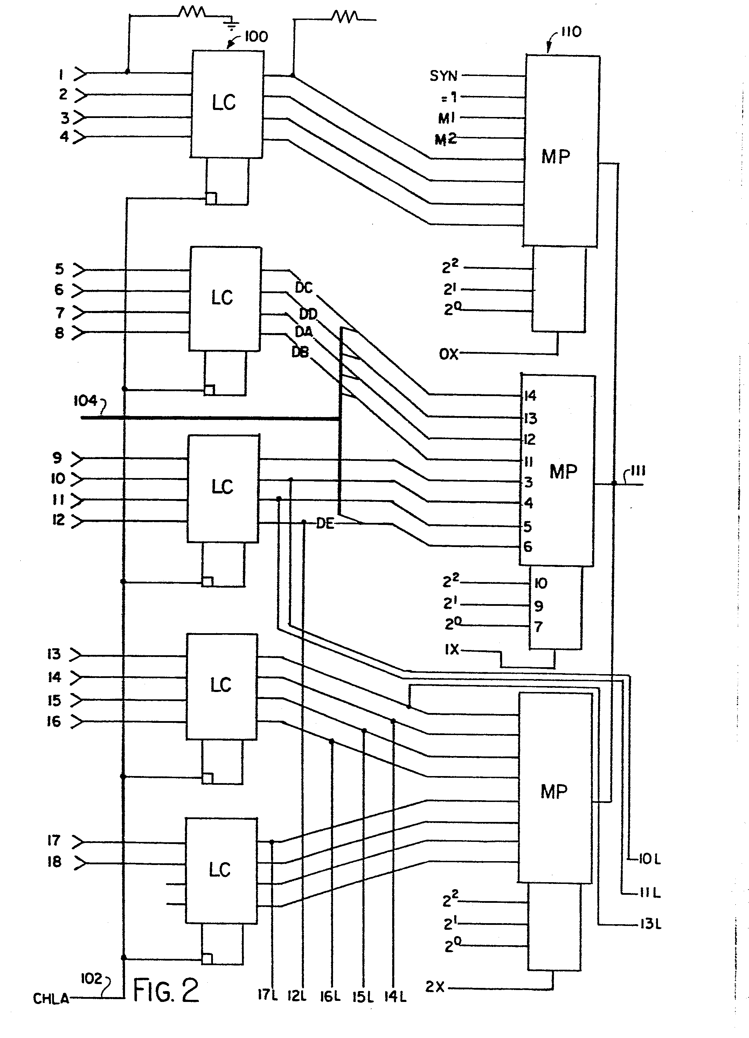

Not in limitation, but as an aid to understanding the Drawing, the following symbol definitions are offered. The symbols appearing in Figure 2 will be first defined; the definition of symbols in subsequent drawings will be limited to those which are new over previously defined ones.

Throughout:

Arrows next to lines indicate direction of signal.

G within a box means the box is a "gate" of some type, explained in the specification.

FF within a box means the box is a flip-flop of some type, explained in the specification.

In Figure 2:

1 to 18, inclusive, signify parallel channel lines (e.g.from a computer). Illustratively, lines 1 through 9 can be considered BUS or data lines (with line 1 through 8 carrying data and line 9 a parity signal), whereas lines 10 through 18 can be considered TAG lines or lines carrying control signals (such as Service 10, Data 11, Command 12, and Suppress 16). (But at the peripheral, these lines would have complementary significance.)

LC is Level Converter.

DA, DB, DC, DD, and DE indicate BUS data plus one TAG line (e.g., Command 12) sampled after level conversion.

10L through 17L indicate TAG or control signals after level conversion.

SYN is a synchronization signal during non-message times. It is a repetitive 010101 at clock time.

=1 is a code signal of repetitive "1". In Figure 2 its purpose is to signify start of a message.

M1 is a code signal of mode.

M2 is a code signal of mode. It together with M1 produces a two bit code for establishing mode.

MP is multiplexer.

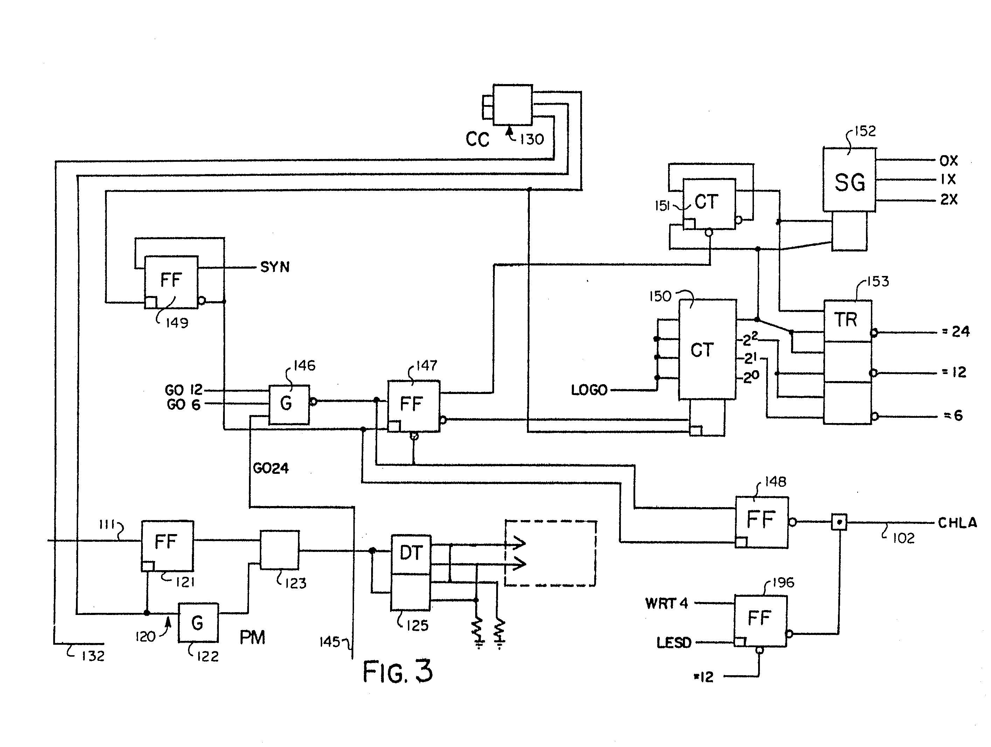

0X, 1X and 2X and well as $2^0$, $2^1$, and $2^2$ are inputs to the multiplexers from control elements, namely, a counter CT and shift gate SG in Figure 3.

CHLA means Channel Latch, a channel control signal.

In Figure 3:

CC is Crystal Clock.

GO6, GO12, GO24 are signals for counts of 6, 12 or 24 bits for serialization by the multiplexer.

=6, =12, =24 are signals indicating completion of the bit count (e.g., of serialization) to those respective numbers.

LOGO is a logical zero signal, a constant.

CT is Counter.

TR is Translator.

SG is Shift Gate.

PM is Phase Modulator.

DT is Driver for Transmission.

WRT4 indicates a signal in Mode 2, generated preliminarily in establishing the Mode 2 or WRITE condition for transmission.

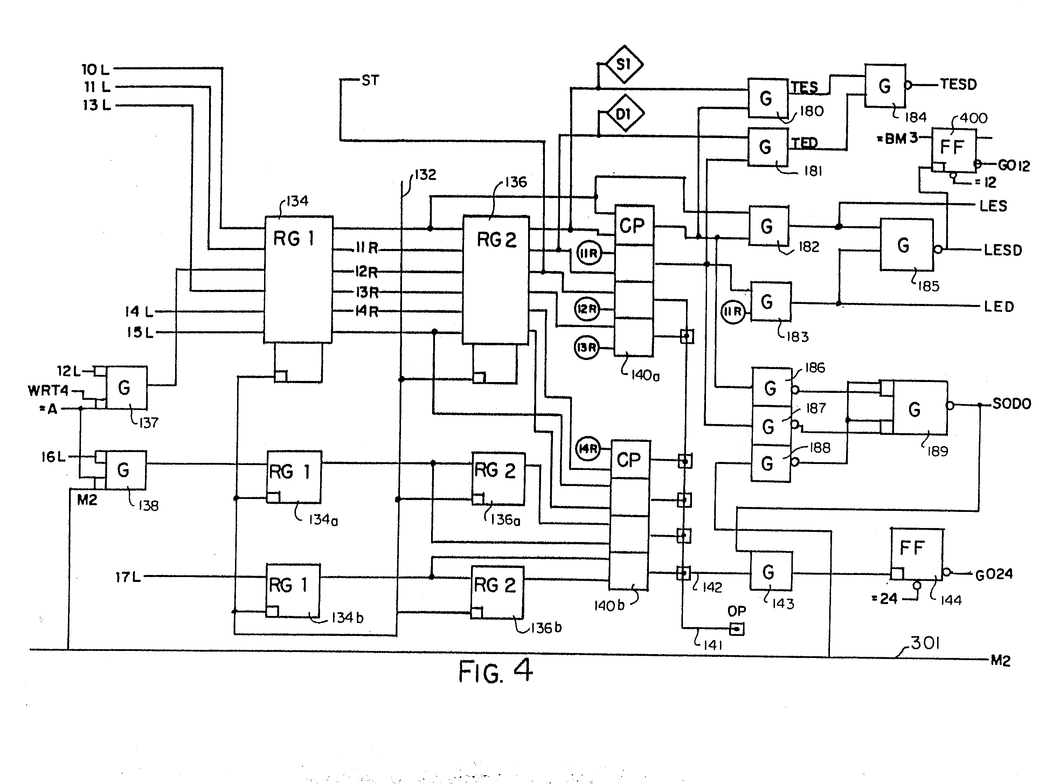

LESD is a signal, incoming here, representing the Leading Edge of Service or Data (see Figure 4).

In Figure 4:

=A signifies a line controlled by =A input, which may be either "true", in which case the input of =A puts the logic element in readiness for A end operation (e.g., adjacent a computer), or "false", in which case the logic element can be considered in readiness for B end operation (e.g., adjacent a peripheral device). My circuitry adjacent the computer is commonly referred to as "A" circuitry, whereas the opposite end of my circuitry next to the peripheral is called "B".

RG1 indicates register one, for first bank registers.

RG2 indicates second bank registers, containing sampled TAG or control signals one clock pulse behind RG1.

CP indicates comparator, for comparing the data in RG1 against RG2.

OP is Out Pulse of comparator CP.

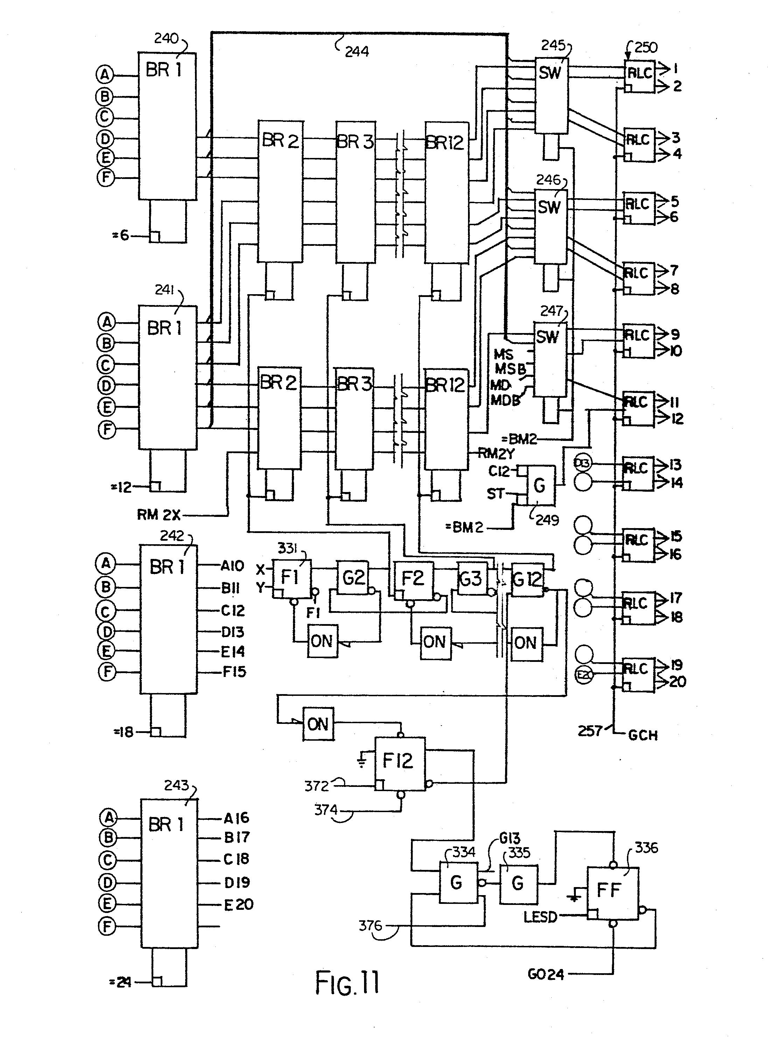

11R through 14R simply represent code markings in
    Figure 4 to connect lines respectively so marked.
ST is a "status" signal from the peripheral, e.g. "status
    in", taken off here for input in Figure 11.
SI within the diamond means a Service In signal.
DI within the diamond means Data In signal.
TES is Trailing Edge of Service.
TED is Trailing Edge of Data.
LES is Leading Edge of Service.
LED is Leading Edge of Data.
TESD is Trailing Edge of Service or Data.
LESD is Leading Edge of Service or Data.
SODO is Service or Data.  It is a pulse occurring on
    either the rise or fall of service or data, that is,
    on any edge of service or data, whether leading or
    trailing, out or in.
=BM3 is a signal of received Mode 3 operation at the
    B end.

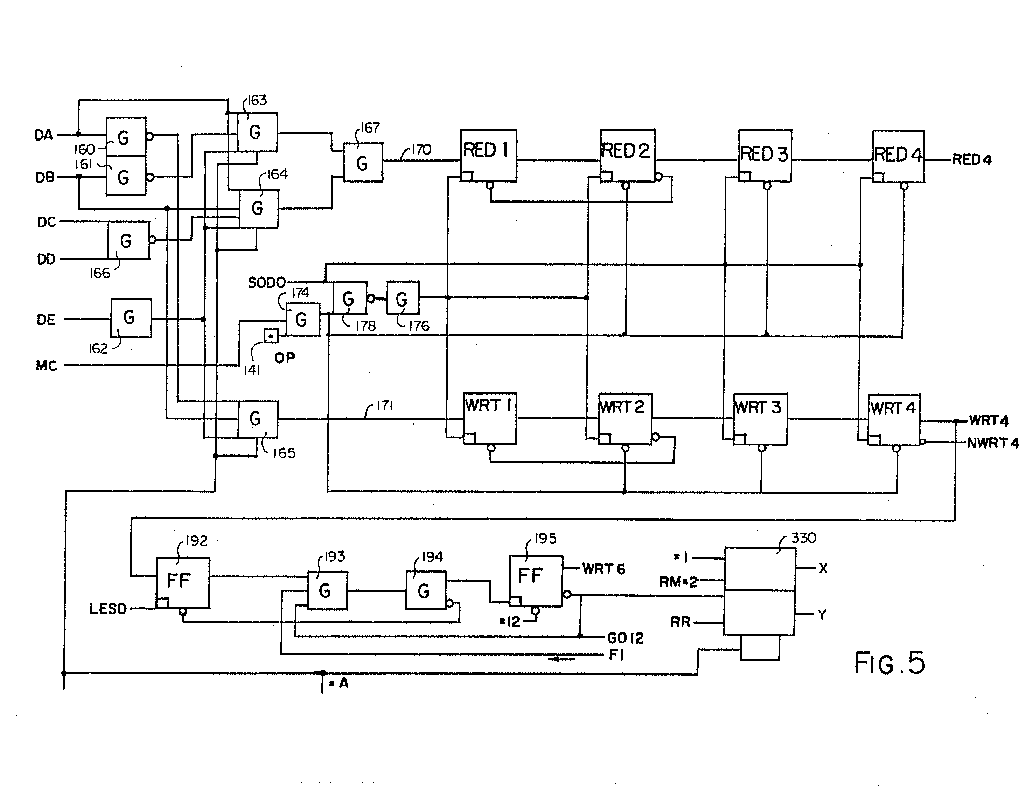

        In Figure 5:
MC is Master Clear, a signal sent through the complete
    logic circuitry for a short time following start up
    after a period of non-use.  It clears all elements
    of the logic, removing any old settings, and makes
    the logic ready for reliable use.
RED is READ.
WRT is WRITE.
    --the numbers 1 through 4 following RED and WRT
    indicate respectively for each location:  Command
    Rise at 1, Command Fall at 2, Service Rise at 3, and
    Service Fall at 4.
NWRT4 is not write 4.
WRT6 is a signal in Mode 2.
RR is Received Message, regardless of which end received.
X is output to first rank buffer control Fl as enable.
Y is output to first rank buffer control Fl as clock.

0122870

- 12 -

Fl is return signal from first rank buffer control, sent
     when that control becomes empty. This portion of the
     circuit in Figure 5, as well as the portion to the
     right dealing with the X and Y pulses, operates at
     both ends of my logic in Mode 2.

RM=2 is Received Mode 2 signal of B end operation.

          In Figure 6:

RM=3 is Received Mode 3 signal of B end operation.

          In Figure 7:

=BM2 is a signal of Received Mode 2 at end "B".

          In Figure 8:

RM2 is Received Mode 2; here it is a signal at the A end
     reflecting receipt of a Mode 2 "acknowledgment" from
     B end.

RM3 is Received Mode 3; here it is a signal at the A end
     reflecting receipt of a Mode 3 message from B end.

SI within a circle indicates a specially generated signal
     for "Service In."

DI within a circle indicates a specially generated signal
     for "Data In."

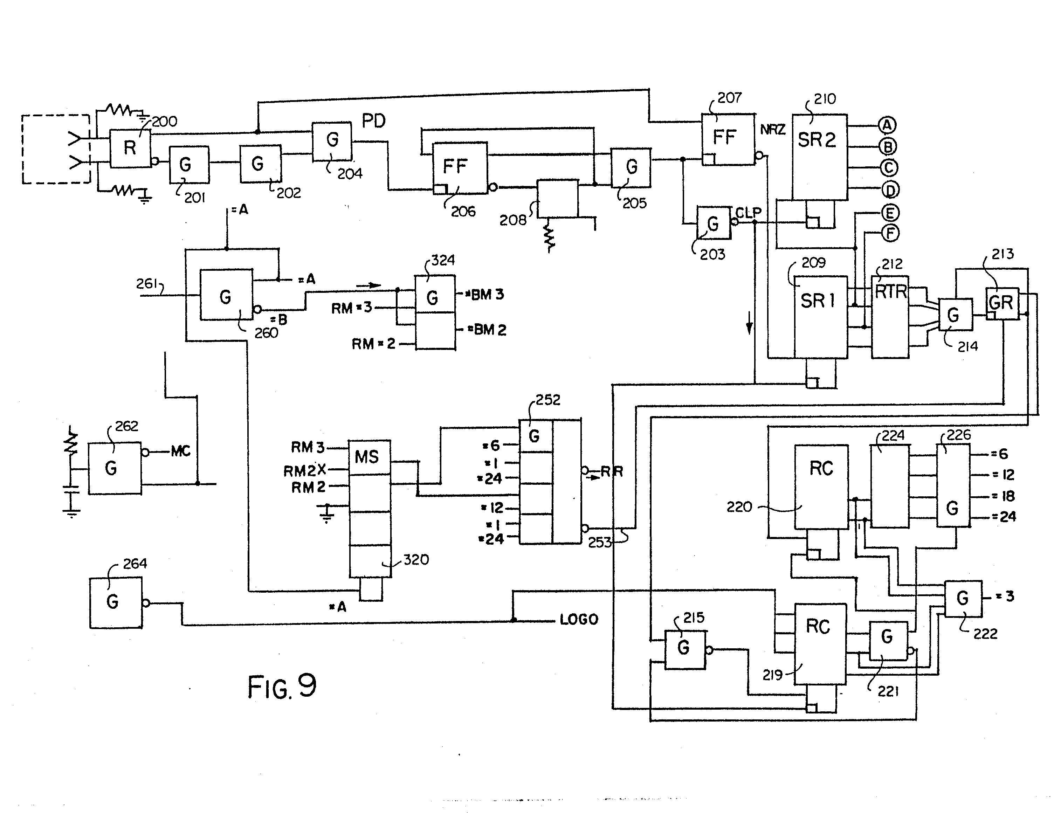

          In Figure 9:

R is Receiver.

PD is Phase Demodulator.

NRZ is Non Return to Zero.

CLP is Clock Pulse.

SR1 and SR2 are shift registers for restoring parallel
     form for the data transmitted serially.

A through F within circles are restored parallel data
     lines.

RTR is Receive Translator.

GR is Go Receive, a signal which starts a counter RC
     at receiving end, i.e., whether the A or B end.

RC is Receive Counter.

=6, as well as equal 12, 18, 24, and 3 are all count
     signals.

=B relates to B End operation (cf., =A). JVM 4/6/84

RM2X is a special Mode 2 signal at the B or receiving
    end.

MS in a rectangular block is Multiplex Switch or Latch.

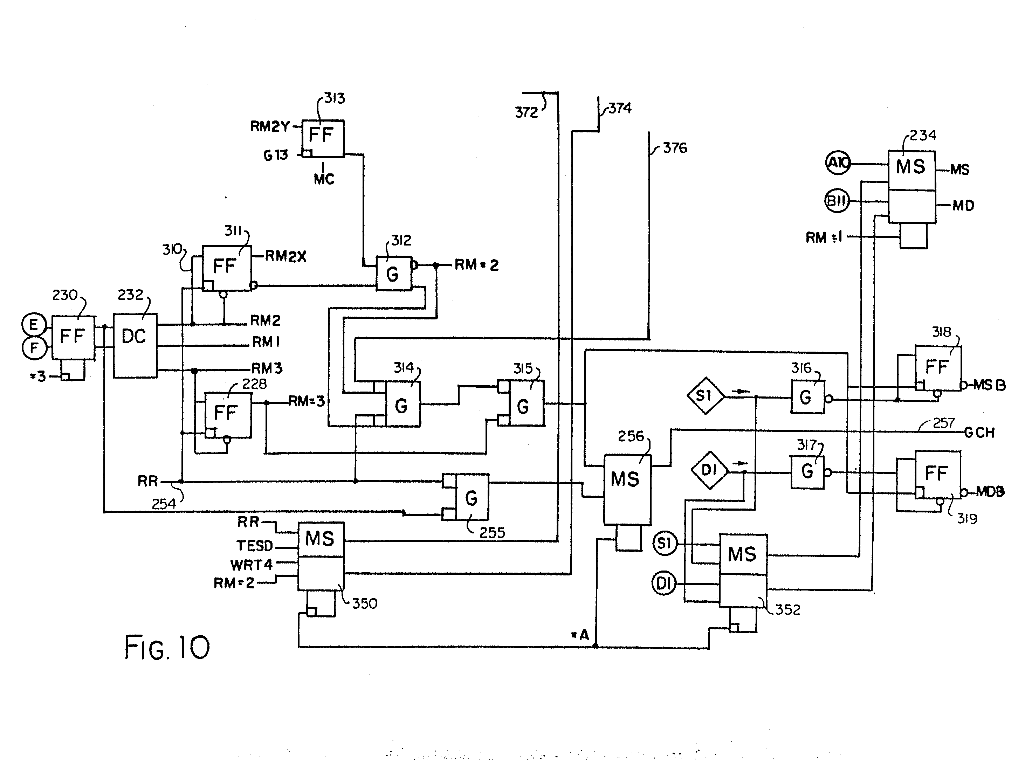

        In Figure 10:

E and F within circles are sampling of mode bit
    signals from the first shift register SR1 in Figure
    9, taken at the count of =3, at which time those
    mode bits are at stations E and F of the shift
    register SR1.

DC is Decoder.

RM2Y is a special Mode 2 signal at the B or receiving
    end.

RM1 is Received Mode 1.

RM=1 is an enabling signal in this figure and comes from
    and is the same as the RM1 output in this figure.

A10 and B11 within circles (at upper right of Figure 10)
    indicate incoming connecting lines from A10 and B11
    at the left of Figure 11, those lines respectively
    being Service and Data lines for the purpose of
    illustration.

MS adjacent a line is Modified Service, either in or
    out depending on external device serviced.

MD adjacent a line is Modified Data.

MSB is Modified Service at B end.

MDB is Modified Data at B end.

GCH is Gate Channel.

        In Figure 11:

BR1 is a main bank of registers, and means buffer
    rank 1, that is the first rank of registers for
    holding parallel data after conversion of it from
    serial form into parallel form at the receiving end.

BR2 through BR12 indicate buffer registers 2 through 12
    inclusive, that is, a total of 12 buffer registers
    capable of holding 12 bytes.

F1 through F12 indicate flip-flops indicating full or
    empty buffer registers of the same number.

G2 through G12 indicate gates for buffer registers of the same number.

G13 indicates an output pulse generated momentarily after data is taken out of the last buffer register BR12 by a pheripheral device.

ON within squares refers to gates which will be described.

SW indicates a Switching Control for either allowing data in BR1 to go directly to the level converters RLC at the receiving end, or causing the data to pass through all the buffer registers BR1 through BR12. The input signal =BM2 causes data to pass through all the buffer registers.

Lines A10, B11 through E20 at left in Figure 11 are indications of line outputs from certain of the first rank of buffer registers which connect to those locations so marked, mostly to the level converter RLC at the right in Figure 11, except for A10, B11, and C12.

RLC indicates level converter at the receiving end, whether B or A.

Description of the Preferred Embodiment

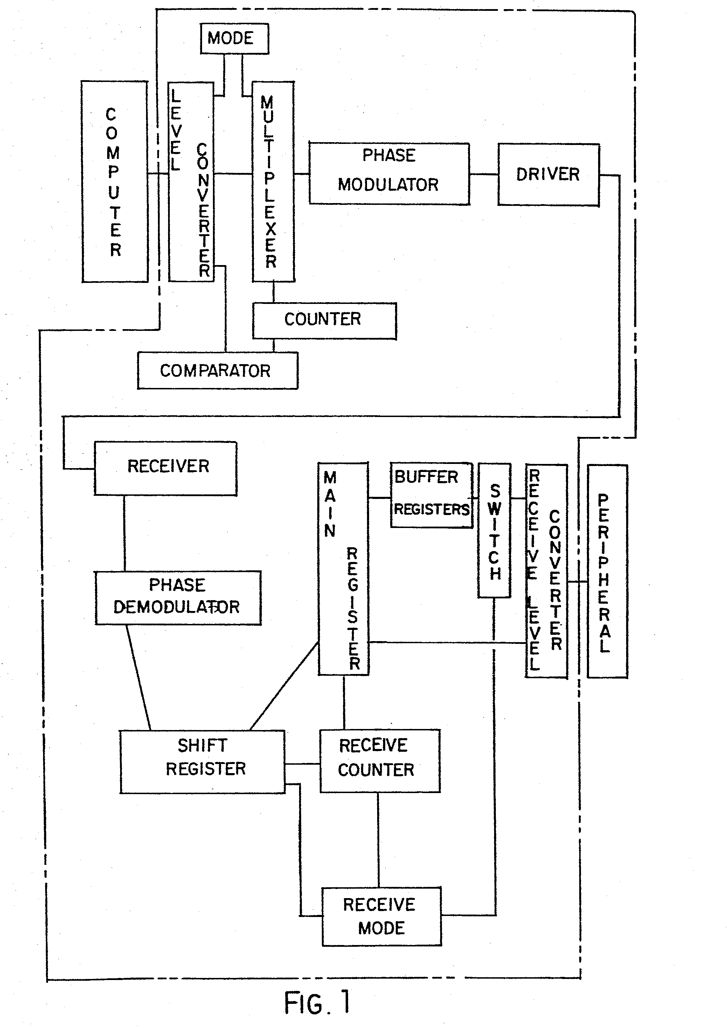

Referring to Figure 1, digital data from an external COMPUTER passes through parallel channels to a LEVEL CONVERTER which merely changes the pulse levels from the computer to a level more readily usable within my logic circuitry, although my logic circuitry may indeed be employed without such conversion, if desired. A COMPARATOR samples the parallel stream of data signals from the LEVEL CONVERTER (illustratively what might be called TAG data) and compares that data stream one clock pulse of delay against itself to determine when a change occurs. At the change, a COMPARATOR pulse initiates a COUNTER which starts the MULTIPLEXER operation for serializing the parallel data from the LEVEL CONVERTER. In the normal mode or Mode 1 operation, where 24 bits are illustratively transmitted, the COMPARATOR pulse at this time also effectively causes initiation of the signal for the Mode 1 operation for full Multiplexing. Modes 2 and 3, however, are established by MODE sampling of data from the LEVEL CONVERTER and inserting special lead bits as the beginning bits of any byte passed or converted by the MULTIPLEXER into serial form. From the Multiplexer, the serialized data goes through a PHASE MODULATOR which simply enhances reliability for long distance transmission. A DRIVER for transmission sends the serialized data out a line of a coaxial cable.

A RECEIVER at the other end of the cable passes the data through a PHASE DEMODULATOR. From that, it goes into a SHIFT REGISTER which converts the received data into parallel form. The lead message bit into the Shift Register initiates the action of a RECEIVE COUNTER which controls transfer of data from the SHIFT REGISTER to a MAIN REGISTER. The MAIN REGISTER may in fact be a first rank buffer register. However, before data is transferred from the SHIFT REGISTER into the MAIN REGISTER, lead bits establishing mode are sampled out of the SHIFT REGISTER to establish RECEIVE MODE signals which do two things. One is that of establishing the degree of counting by the RECEIVE COUNTER, and the other is that of controlling the SWITCH. In both Modes 1 and 3, the SWITCH allows all parallel data to pass directly from the MAIN REGISTER to the RECEIVE LEVEL CONVERTER and then to the external PERIPHERAL device at the receiving end.

But where the MODE established is that of Mode 2, a signal is generated which establishes a count of 12 by the RECEIVE COUNTER and also a signal is established that controls a SWITCH which blocks data from passing directly to the RECEIVE LEVEL CONVERTER. Under this condition, data in the MAIN REGISTER is passed through the BUFFER REGISTERS and collected until the PERIPHERAL requests data. At that point, through means not illustrated in Figure 1, a signal is generated for passage of the temporarily stored data, on a first-in/first-out basis, from the BUFFER REGISTERS to the RECEIVE LEVEL CONVERTER and then to the external PERIPHERAL unit or device.

Referring to Figure 2, five Level Converters 100, also labeled LC, (quad BUS receivers, MC10129) are interfaced with a computer and particularly with the parallel output lines labeled 1 through 18 of the computer and provide a temporary latch storage of the data. (The same assembly is also at the opposite end of my circuitry and interfaced with a peripheral device.) The output of the Level Converters is connected in parallel to serializing means 110, such as 3 eight-station Multiplexers (MC10164; within the box representing one of the Multiplexers are numbers illustrating specific pin connections as employed.) Serialized output from these Multiplexers, in a sequence starting at the very top and terminating at the very bottom of the column of Multiplexers 110, passes out line 111 in Figure 2 and is incoming at line 111 of Figure 3 where it is delivered to a Phase Modulator 120 which may be of any suitable construction to enhance transmission--illustratively a dual Type D master-slave flip-flop 121 (MC10131), a quad OR/NOR Gate 122 (MC10101), and a triple 2-input exclusive-OR gate 123 (MC1672), in a known configuration for phase modulation.

Modulated pulses pass then to a Driver 125 (MC10192) for differential transmission to the opposite or B end of my logic circuitry. Any suitable Driver for sending the phase modulated pulses out through a conduit of any suitable type to the logic circuitry at the opposite end of the conduit may be employed. A conduit of coaxial cable is preferred. But even optical means such as fiber optics may be used, if desired. I favor
differential transmission of parallel two lines each way
for the comparative value inherent in the practice of
differential transmission.

Continuing on Figure 3, the operation of the
sending logic circuitry is controlled by clock pulses
from a Crystal Clock CC 130 whose clock pulses may be
generated in any suitable manner (not shown) and sent
through the output lines shown from it. Clock line 132
(lower left of Figure 3) passes to Figure 4 where it
continues as line 132 feeding clock pulses into a first
bank of Registers 134, also labeled RG1, as well as a
second bank of Registers 136, also labeled RG2. The
uppermost registers of each of these banks may
constitute master-slave flip-flops (MC10176), each
containing 6-bit flip-flops with clocking being common
to all 6 individual flip-flops. However, since 8 lines
are being fed in for comparative purposes, banks 134 and
136 each include two additional Registers, namely 134a
and 134b and 136a and 136b. Each of these additional
Registers suitably may consist of a dual master-slave
Type D flip-flop (MC10131).

Incoming lines 10L through 17L at the left of
Figure 4 conduct samples of level converted output from
lines of comparable number shown exiting from Figure 2.
The sampled output of these lines is passed in parallel
through each Register 134 and 136, with the data in
Register 134 being one clock pulse behind that in
Register 136. For the most part, the sampling lines
feed directly into the Register 134. However, in the
case of line 12L, which illustratively carries converted
level of a "command" line from a computer, and in the
case of line 16L, which illustratively carries converted
level of a "suppress" signal from a computer, there is
interposed in each line before it reaches or is
connected to the first bank of Registers 134 a special control box 137 and 138 respectively, each suitably consisting of a dual 2-wide 2-3-input OR- AND/OR AND-INVERT gate (MC10117). More will be said about this control later; at this point, since I am first covering the most simple operation, namely that for Mode 1, it is sufficient to note that the gates 137 and 138 operate to allow passage of signals therethrough on lines 12L and 16L in the absence of special input of WRT4 or M2. (It should be noted that input M2 signifies a "mode bit 2", which is characteristic for either Mode 2 or Mode 3 and effectively alters gate 138).

To the right of the two banks of Registers 134 and 136 (Figure 4) is a Comparator CP, suitably consisting of two gate units 140a and 140b, each suitably being a quad exclusive OR gate (MC10113). Outputs from each bank of Registers 134 and 136 are passed to the Comparator. Illustratively, lines exiting Register 134 labeled 11R through 14R are shown to continue into the Comparator by the same labeling at inputs of the Comparator. Thus the signals of control (e.g. TAG) in the bank of Register 136 are compared against those in 134, which is one clock pulse behind the signals in Register 136. Where the data in the two Registers is the same, nothing occurs within the Comparator 140. But where there is detected a change of data, which indicates the start of a message, the Comparator output 141, also labeled OP, is that of a pulse of one clock width which is carried over and enters at OP at the middle left of Figure 5, marked as line 141. The same pulse of one clock width also travels out line 142. Gate 143 (a triple 2-3-2 input OR/NOR gate, MC10105) - - assuming that other circuitry of my logic does not dictate any mode other than Mode 1 - - allows it to pass through and set the flip-flop 144 (a master-slave flip-flop, MC10131) so as to provide a signal GO24 at its lower or complement pin.

The GO24 signal from flip-flop 144 (Figure 4) enters at 145 in Figure 3 and enters as GO24 in Figure 6. Saving details of the circuitry of Figure 6 for later, the result of a GO24 signal entering Figure 6, absent signals causing a different mode for transmission, is that of establishing at this point a Mode 1 transmission. The outputs M1 and M2 from the circuitry of Figure 6 enter the topmost Multiplexer in Figure 2 and dictate the mode condition to be transmitted to the receiver logic at the remote end of the transmission medium.

The GO24 signal entering line 145 of Figure 3 goes through logic which controls the Multiplexer operation in a manner that in fact causes the 24-bit transmission of Mode 1. A gate 146 (a triple 2-3-2 input OR/NOR gate, MC10105), having no contrary input, allows the GO24 signal through. From that gate, it goes to two separate flip-flops 147 and 148 (each a dual type D master-slave flip-flop, MC10131). Also fed to these flip-flops 147 and 148 is the clock pulse coming from a like flip-flop 149 (MC10131) interposed in the line from clock 130. The input of half-clock time from flip-flop 149 is significant and perfectly times release of a signal for 24-bit operation from flip-flops 147 and 148 with the timed synchronization SYN. From flip-flop 148, the signal goes out line 102 as a Channel Latch CHLA signal to the line 102 of Figure 2 and prevents change of data while multiplexing and sending the message or byte.

From flip-flop 147, the signal triggers initiation of count by Counter 150 (a universal hexadecimal counter, MC10136) and counter means 151 (a dual Type D master-slave flip-flop, MC10131), both operating at crystal clock CC time. The LOGO input comes from like labeling in Figure 9 and is but a constant zero input. Outputs labeled $2^0$, $2^1$, and

$2^2$ of Counter 150 are fed into Multiplexer 110 in Figure 2 at the same respective labeling.

Control of multiplexer propagation times, that is, indexing from the first multiplexer to the second and then the third in the column of multiplexers 110 of Figure 2, is accomplished by signals OX, 1X and 2X from translator shift gate 152 (a Dual Binary TO 1-4-DECODER, MC10171) responsively to counters 150 and 151 in Figure 3.

At this point reference is made to the leading inputs into the multiplexer 110 in Figure 2. The Synchronization Signals SYN, from SYN in Figure 3, are constantly generated and go out the multiplexer to synchronize the entire logic at the receiving end during non-multiplexing times, that is non-message times. The first bit following that is =1 (a constant input since the line is open effectively causing a voltage input of minus 5.2 which is interpreted by the logic as a "1" or "=1"). The =1 is the first "message" bit sent and received. Then follows the MODE bits M1 and M2; thereafter the message.

As a message is serialized by the Multiplexers 110, a translator gate 153 (Figure 3), also labeled TR (suitably a triple 2-3-2 input OR/NOR gate, MC 10105) senses the counts sent to the Multiplexers from the Counters 150 and 151. Outputs from the Translator 153 are "cancellation" outputs; and in the case of completing a Mode 1 or 24-bit transmission, the output =24 signal returns to flip-flop 144 of Figure 4 to clear or reset that flip-flop. This completes the details for a Mode 1 transmission from the "A" end of the logic apparatus.

Refer now to Figures 9, 10 and 11 for a description of the logic involved in the receipt of that Mode 1 transmission at the "B" end or second end.

The receiver 200 (Figure 9) is suitably a triple line receiver (MC10114), having one input connected to one line and a second input connected the second line of the coaxial cable, since differential transmission was employed in the illustrated case for greater accuracy and control. From the receiver, phase modulated data passes through a phase demodulator PD of conventional components and any suitable construction. The illustrated demodulator consists of OR/NOR gates 201, 202 and 203 (MC10101), exclusive OR gates 204 and 205 (MC1672), master-slave flip-flops 206 and 207 (MC10131), and a delay line with resistor 208. The function of the Phase Demodulator is simply to return the phase modulated data back to its condition before modulation. It should be appreciated, though, that the illustrated demodulator also functions to separate the data and the clock signals when they are received in phase modulated form. Thus, the output of flip-flop 207 is that of non-return-to-zero data NRZ and the output of the OR/NOR gate 203 is that of the clock pulse CLP of data transmission. The NRZ data is immediately forwarded through Shift Registers 209 and 210, also labeled SR1 and SR2 (each a 4-bit universal Shift Register, MC10141), controlled by the clock signal from gate 203. The Shift Registers simply convert the serialized data coming in over the coaxial cable back to parallel outputs, which outputs are labeled A through F within circles in Figure 9. While two 4-bit Shift Registers are illustrated, only 6-bit capacity would be necessary under the particular conditions shown where the parallel output at this stage is 6 bits in parallel.

A Receive Translator 212 (suitably a quad OR/NOR gate, MC10101) constantly samples the 4 bits from the Shift Register SR1 or 209. Recognize that the purpose of the translator is to determine when a digital data pattern of 1011 (i.e., the =1 start of message bit after synchronization) is outputted from the Shift Register SR1. Normally, the transmitting circuit is sending synchronization 101010, signifying that it is not active. However, when a message is to start, there will appear a 11 (e.g., bottom two stations of SR1 both carrying a 1 bit). The 1011 start output from the translator 212 sets a flip-flop 213 (master-slave, MC10131), also labeled GR, through the agency of a gate array 214 (a dual 4-5-input OR/NOR gate, MC10109). When set, the flip-flop 213 puts out a signal GR, that is, "Go-Receive", which starts both counters 219 and 220 (universal hexadecimal counters, MC10136), with the input to Counter 219 coming from flip-flop 213. The input to Counter 219 sets gate 215 (triple 2-3-2 input OR/NOR gate, MC10105).

The output from the counters is that of counts equalling 3, 6, 12, 18, and 24 as shown at the right in Figure 9. How this is accomplished is as follows: Counter 219 only initiates the count and only counts to 6; at which time an OR/NOR gate 221 (MC10105) resets counter 219 and steps counter 220, which counts in increments of six thereafter. The gate 222 (dual 4-5 input OR/NOR, MC10109) responds at the count of 3 to send out an equal 3 signal which causes sampling of outputs circle E and circle F from the Shift Register 209. The sample outputs at circle E and circle F will be noted, at the count of equal 3, to contain the two mode bits, M1 and M2 as transmitted. They will be noted to enter the logic circuit of Figure 10 at the left, where the labels circle E and circle F are found. That circuit will be explained below.

Completing the counter output circuit of Figure 9, a decoder 224 (dual binary TO 1-4 decoder, MC10171) is interposed and passes output to a quad OR/NOR gate 226 (MC10101) which provides a sequence of count outputs at equal 6, then equal 12, then equal 18, and finally equal 24. These outputs from gate 226 control the filling of the Main Register or first bank of Buffer Registers labeled BR1, which will be further explained below.

The significant sequence of events at the receiving end requires now that the circuit treating the sampling of mode bits at the count of =3 be explained. This is shown in Figure 10, where those mode bits labeled circle E and circle F are captured by flip-flop 230 (a hex "D" master-slave, MC10176) whose output is sensed by a translator DC or decoder 232 (dual binary TO 1-4-Decoder, MC10171). Since the illustrated transmitted message was in Mode 1, that is 24 bits, the output at Decoder 232 is that of a received Mode One, that is the output RM1, or normal. Other output lines from Decoder 232 are not significant for a Mode 1 receipt. The RM1 signal from the decoder becomes input as RM=1 at the upper right in Figure 10, where it enters a modifier or selector 234, also labeled MS (a quad 2-input multiplexer/latch, MC10173) whose output will be explained after discussing the filling of the main bank Registers BR1 in Figure 11.

Referring to Figures 9 and 11, it will be recognized that a 24-bit Shift Register need not be used, and that the counts of 6, 12, 18, and 24 from the quad OR/NOR gate 226 are used to control the filling of four 6-bit Main Registers 240, 241, 242, and 243, all also labeled as a first bank Buffer Register BR1 (each being a Hex "D" master-slave flip-flop, MC10176). The first 6 bits of a received data byte fill Register 240, and then Registers 241, 242, and 243 are filled with the remaining 24-bit Mode 1 transmission (shifting to each in sequence according to the count input setting). Observe that the first 3 bits of the byte, at the first 3 sections or stations of Register 240, are not meaningful for further handling. The external
peripheral unit or device does not understand those bits
which are solely used by my internal logic. Other bits,
however, are allowed to pass in parallel from the
Register Bank BR1 to the peripheral unit at the
receiving end in the following manner, as illustrated in
Figure 11: the first 9 bits after the introductory 3
(i.e., bits 9 through 12) go through by-pass lines 244
into a bank of Switches 245, 246, and 247, also labeled
SW (quad 2-input Multiplexer/Latch, MC10173). These
switches allow passage of the bits from BR1 through the
switches to the receive level converters RLC unless they
receive a Mode 2 control input, labeled =BM2, which they
do not in Mode 1. Thus, in Mode 1, the first 9 bits
(after the internal first 3) pass through switches SW
into the bank of receive level converters 250 (each
being bus driver, MC10128), where they are converted
back to levels understood by the peripheral device and
made ready for feed out to the peripheral device on
lines 1 through 9 at the right in Figure 11. The bits
going out lines labeled A10 and B11 and C12 of register
242 (which illustratively represent service, data, and
command signals from the computer, which are transmitted
as "bits" and received here) are preferably handled
somewhat differently, for reasons which will be evident
below. I pass signals A10 and B11 from register 242 to
a multiplex selector 234 (Figure 10), which is also
labeled MS (a quad 2-input multiplexer/latch; MC10173),
where they exit as signals MS and MD - - here signifying
service out and data out. (The RM=1 input is an
enabling signal to selector 234 in Mode 1. It comes
from and is the same as RM1 output from decoder 232 in
Figure 10.) Those signals A10 and B11 leave selector
234 as MS and MD and enter switch 247 (Figure 11). In
Mode 1, they go directly through switch 247 and are
converted by the level converter RLC for lines 10 and 11 to the peripheral device. The "command" signal of line C12 from register 242 of Figure 11 is passed directly to C12 of the gate 249 of Figure 11 (a dual 2-wide 2-3-input "OR-AND/OR-AND-INVERT"gate; MC10117). With no contrary input to that gate in Mode 1, the C12 signal passes to the Receive Level Converter and out line 12. Remaining outgoing lines of registers 242 and 243 go directly to the level converter RLC for conversion. In essence, even lines A10, B11, and C12 of register 242 could go directly to the level converter RLC in Mode 1, but they are preferably handled as aforenoted inasmuch as the bits or signals (e.g., service, data, and command) carried by those lines are not part of the smaller message transmissions in other modes and yet are important for some types of equipment serviced by my logic circuitry and important for special purposes in Modes 2 and 3, as will be explained. Thus even in Mode 1, I control those signals, as illustrated.

To complete the circuitry for the Mode 1 condition, reference is made to Figure 9, where translation gate 252 ("4-Wide" OR-AND/OR-AND-INVERT gate, MC10121) is fed the count totals from the Quad gate 226 of the counter circuitry (i.e., the significant totals for input here are at the counts of 6, 12 and 24, which are the three lengths of messages illustrated). Counting always stops at 24; and in modes other than Mode 1, it stops as a result of translator 252 interpreting the mode condition and count for it from selector 320 (MC10173), which in Mode 1 receives no input limiting the translator 252. Therefore translator 252 will not generate the RR output from it until it recognizes completion of the count of 24. At that point, signals of "receipt" come out of translator 252 to do two things in Mode 1. One signal goes out line 253 to clear flip-flop 213, labeled GR, which stops the Receive Counter. Also, at the completion of the count,

0122870

- 26 -

an RR signal from gate 252 enters Figure 10 at line 254. In Mode 1 condition of 24 bit count, the only significant action of the signal RR (Figure 10) is that of passing through gate 255 (a dual 2-wide 2-3-Input OR-AND/OR-AND-INVERT gate, MC10117) to a controller or multiplex selector 256 (Quad 2-input multiplexer/latch, MC10173), and then out on line 257 as a gate channel signal GCH which enters Figure 11 at line 257 to effectively allow passage of all parallel bits simultaneously to the level converters RLC and out to the peripheral unit.

Other circuitry in Figure 10 is not needed in Mode 1 condition. Likewise all other circuitry so far not described is unnecessary for the Mode 1 condition; but the following should be noted: First, at the left in Figure 9 is an OR/NOR gate 260 (suitably a Quad OR/NOR gate, MC10101). In the case of the assembly or box containing my total circuitry at one end, such as the "B" end or end adjacent an external peripheral unit, the wire 261 leading off gate 260 is grounded (or in a closed condition), making the "false" side of gate 260 mean =B. In the case of my total circuitry present in a box at the other end, such as the "A" or opposite end adjacent a computer, that wire is opened and not grounded, making the "true" side of gate 260 mean =A. The significance of this arises in connection with modes of operation other than Mode 1. However, note that the input line =A sets the condition of selector 320 in Figure 9, which means that selector 320 in the B end circuitry (with wire 261 grounded at that end) operates to "pass" only the inputs of the second and fourth inputs to it; and the fourth input line is grounded so as to disable any 6 bit translation at gate 252 for generating exiting RR signals at the end of a 6 count. The condition illustrated assumes no receipt at the B end of any 6 bit message at any time. On the other hand, with wire 261 open at the A end, the first and third inputs, namely RM3 and RM2, pass selector 320; and to be especially noted is that these pass to gate 252 to cause an RR output for the A end at the counts of 12 and 6, respectively, both of which can be relevant for A end receipt of transmissions from the B end. Also at the left in Figure 9 are two other OR/NOR gates 262 and 264 (each MC10101). Gate 262 controls the input of the Master Clear signal aforementioned. Gate 264 controls the condition for the logical zero connections, i.e., the LOGO condition.

Also to be recognized is that, in Mode 1 or normal operation using 24 bit data messages, the response from an external peripheral unit back to the computer is communicated in the same manner as that hereinabove described for a communication from the computer to the peripheral. Specifically, the sending circuitry of Figures 2, 3, 4 and 6 is present in my logic circuitry at the peripheral end and used by it to send a Mode 1 acknowledgment of 24 bits; and the receiving circuitry of Figures 9, 10 and 11 is present at the computer end and used to receive from the periphery. Of course, the bits of the periphery's acknowledgment back to the computer may carry different significance (e.g. instead of service and data "out" bits, the periphery's acknowledgment may be that of service and data "in" bits or signals for input to a computer, etc.).

Observe that in Mode 1, the messages through my logic are sent when signals rise or fall, and therefore trigger a comparator pulse.

Now to be considered is operation in Mode 2, the WRITE mode of transmission. In this mode, and also in Mode 3, the messages through my logic are sent only on the significant edge (leading or trailing) of service or data signals; and the significant edge of those signals varies depending on whether the A or B end is sending and whether the Mode is 2 or 3.

Thus, while the logic at the upper right and middle right of Figure 4 was not significant for a Mode 1 condition, it is highly significant for Mode 2, and also Mode 3 (to be covered later). A multitude of gates are in this logic. Gates 180, 181, 182, 183 are AND gates (Quad 2-input AND, MC10104) for establishing a signal as labeled just to their right, namely TES, TED, LES and LED. Their input lines are shown; and it should be recognized that line 10L sampling is that of "service" and line 11L sampling is that of "data". Gates 184 and 185 are OR/NOR gates (triple 2-3-2 input, MC10105), with their output being that of TESD and LESD, respectively. In Mode 2 transmission, the LESD signal from Figure 4 enters at LESD in Figure 3.

Gates 186, 187, and 188 in Figure 4 are Quad OR/NOR gates (MC10101), with signals relevant to service and data exiting the Comparator 140 going to gates 186 and 187 respectively. A gate 189 (dual 2-wide 2-3 Input "OR-AND/OR-AND-INVERT, MC10117) receives input from OR/NOR gate 188, which in turn is fed from line 301. The group of gates 186 through 189 controls the signal to gate 143 in a manner that, once a Mode 2 or Mode 3 condition is signaled from line 301, the resulting signal from gate 189 to OR/NOR gate 143 places gate 143 in a blocking or NOR position preventing any 24 bit transmission until the Mode 2 or 3 transmission is completed.

The change to Mode 2 (or Mode 3) from Mode 1 involves special circuitry in Figure 5. Illustratively, data bits for reading and writing and command are sampled after level conversion and before serialization. Thus, the lines marked DA through DE (Figure 2) are sampled and the bundle of lines 104 for sampling connects with the lines of input marked respectively DA through DE in Figure 5. Assume for
purposes of illustration that lines DA through DD carry
data bits 6, 7, 4 and 5, respectively, bearing on
instructions for read, read backwards, write, etc.
Assume that line DE carries command signals. The sample
lines DA through DE feed an array of gates as follows:
OR/NOR gates 160, 161 and 162 (Quad OR/NOR, MC10101);
OR/NOR gates 163, 164, 165 (dual 4-5 input OR/NOR,
MC10109); and AND gates 166 and 167 (Quad 2-input AND,
MC10104).

The arrangement of these gates effectively
combines sampled data in lines DA through DE to effect
signals in lines 170 and 171. In line 170, the signal
combines command and read or read backwards bit
translations, whereas in line 171 the signal combines
command with write bit translations.

At the right in Figure 5 are two series of
master-slave flip-flops (dual type D master-slave,
MC10131). The upper four are labeled RED1, RED2, RED3
and RED4. The output lines at the extreme right of the
upper four are coded with a signal marking RED4, which
is a signal that ultimately dictates a READ mode or
Mode 3. The output line coded WRT4 carries a signal
that ultimately dictates a WRITE mode or Mode 2.

The setting and gaining of the output signals,
either RED4 or WRT4, is accomplished by a few steps,
which will be illustrated as basically four. The steps
may vary depending on the nature of external devices
employed. For purposes of illustration, a computer and
peripheral may be exchanging random messages in Mode 1
and the computer may advise the peripheral that it has
something which causes the peripheral to advise the
computer that it has raised its "address in". The
computer responds with "command out" and other pertinent
instruction signals (leading toward read or write) which
on sampling into Figure 5 enter the first flip-flop in the series of four. Since the same steps are involved for establishing either a READ or WRITE condition, description of a WRITE condition is sufficient. Thus, the pulse enters WRT1 on the rise of the signal "command out". The response of the peripheral is a drop of address in; and the computer communicates back that it drops "command out", which on sampling in Figure 5 is a "fall or drop of "command out" in flip-flop WRT2. Following a "status in" "acknowledgment" from the peripheral, the computer communicates "service out", which is a rise or change entering WRT3. Then after the peripheral responds dropping "status in", the computer communicates its fourth and last message in the process of establishing a Mode 2 (or Mode 3) condition. This fourth message from the computer at this phase is one which effectively is a fall of "service out" in flip-flop WRT4, which generates the Mode 2 output WRT4 in Figure 5. Significantly, all messages in this sequence are 24 bit messages, communicated by my logic in the manner analogous to that illustrated for Mode 1. However, the last of these 24 bit messages, namely the one of WRT4, is the one setting the Mode 2 condition in my logic at both the A and B ends. Even so, it is, illustratively, a 24 bit transmission from the end of my logic adjacent the computer to the end adjacent the peripheral. How it is communicated in full multiplexing despite its introductory Mode instruction of Mode 2 will be explained below.

Of significance in explaining Figure 5 operation is the input from Figure 4. Observe that the comparator output in Figure 4 at line 141 includes command comparisons of line 12L, but not service and data comparisons for lines 10L and 11L. The output including command comparisons enters Figure 5 at 141, passes to gate 174 (MC10105) and then the pulses from gate 174 clear all flip-flops for read or write except the first flip-flop of each group of four. (The
feedback from the second flip-flops RED2 and WRT2 clears
the first flip-flops of each group.) Additionally, the
comparator pulse entering line 141 of Figure 5 passes
through gates 178 (MC10105) and 176 (MC10101), which
delays the pulse until after the aforenoted clear action
of it; and this delayed pulse sets or enables, as a
clock input, the first and second flip-flops in each
group of four. Recognize that once the command line
signal of line 12L entering Figure 4 has performed its
function at the comparator and for the first two
flip-flops of each group of four in Figure 5, there
should no longer be any comparator pulse out line 141.
The reason is because the lines connecting from the
Comparator to line 141 should thereafter not contain any
change of data as the process of establishing Mode 2 or
3 is continued. (Should a comparator pulse come out
line 141 at this stage, it means something is wrong and
all flip-flops of each group of four in Figure 5 will be
cleared, cancelling any start into Modes 2 or 3). The
next significant signal for clock input into the four
flip-flop circuitry of Figure 5 is that of SODO, which
is developed (see Figure 4) from signals in lines 10L
and 11L dealing with service and data respectively.
Until a Mode 2 signal is generated in line 301 of
Figure 4, the gate 188 allows passage of service and
data signals through gate 189 as SODO. That SODO signal
becomes the operative one at this stage to activate GO24
in Figure 4. It passes through gate 143 to flip-flop
144 in doing so. (Once Mode 2 is established and fed
into line 301 of Figure 4, the gate 188 disables gate
189 to prevent further SODO signal exit for so long as
the circuitry remains in Mode 2 or 3.)

In Figure 5, the SODO signal sets the clock
input of the flip-flops RED3, RED4, WRT3, and WRT4, and
by delay through gates 178 and 176 does the same for the first two flip-flops of each group; but the sequence of signals effectively accomplishes movement of the instruction pulses through the four flip-flops for establishing a Mode 2 (or 3) condition.

Consider that the output WRT4 of Figure 5 goes to four (preferably five) places in the logic circuitry at the transmitting end. It connects with a line marked WRT4 in Figure 6. It connects with a line marked WRT4 at the lower left in Figure 10, for reasons which will be hereafter explained. (Again the reader is reminded that my complete illustrated circuitry is present at each end of the coaxial cable linking the same.) The third connection of WRT 4 is shown in Figure 5, namely to a special circuit at the bottom of Figure 5. The fourth connection is at the left in Figure 4. There is a fifth connection, namely that in Figure 3 at flip-flop 196, where WRT6 alternatively might be used.

Note also that Figure 5 shows an output signifying "false" WRT 4, or not write four (NWRT4). That output is a significant input signal for the circuitry of Figure 6, where Mode per se is established. The input of NWRT4 in Figure 6 forces a Mode 2 despite the fact that GO24 is true and a 24 bit message is being sent. This is significant for that last or fourth communication from the computer to the peripheral in establishing a change of mode. It allows that last communication to be in full multiplexing, despite the introductory Mode instruction for Mode 2.

Referring now to Figure 6, a mode discriminator 190 (a Quad 2-input multiplexer/latch, MC10173) receives its input directives from lines at its left. In tracing Mode 2 happenings, the relevant inputs are the NWRT4 and WRT4 inputs just mentioned. Output from the discriminator goes to a Quad AND gate 191 (a Quad 2-input AND, MC10104); and its output is that of the mode lines M1 and M2 feeding the multiplexer 110 of Figure 2.

At this point, some consideration should be given to the manner of the B end behavior during the mode change instructions from the A end of my circuitry.

The B end adjacent an external peripheral receives the mode change messages and sends replies back to the A end in Mode 1 (i.e., 24 bits and GO24), except for the reply to the fourth and last mode change message from the A end where the leading bits establish a Mode 2 condition despite the 24 bits employed for that transmission. The mode bits of that fourth transmission would normally be expected to cause the receiving Figure 9 circuitry at the B end to limit the count to 12; but I prevent that even though received message counts thereafter in Mode 2 are limited to 12.

Referring to Figure 10, when the decoder 232 at the B end determines that the lead bits of the 24 bit message dictate Mode 2, the output from the decoder enters flip-flop 311 (MC10131) through line 310 and also at clear. The result is that the Mode 2 signal for gate 312 of Figure 10 is held in flip-flop 311 until it is released at the clock input by a signal RR. The RR signal comes from the output of gate 252 in Figure 9. Gate 252 receives no input from the multiplexer switch 320 that would trigger an RR output before a full count of 24 is recognized in gate 252, at which point the RR signal goes out and releases the temporarily delayed Mode 2 signal so that it exits flip-flop 311 in Figure 10. Thus, the B end is not placed in a Mode 2 condition until after it handles that last mode change 24 bit message.

Beyond the fact that this special 24 bit received message goes from BR1 (Fig. 11) directly out to the peripheral unit in the manner of a normal Mode 1 communication, there is one further special action at the B end at this time. The released Mode 2 signal from flip-flop 311 enters gate 312 (MC10105) and generates, at the B end, a signal RM=2. That signal RM=2 is fed into gate 324 (MC10105) of Figure 9 and, since the gate is set for B end operation, there is created a signal labeled =BM2.

The signal =BM2 thus generated enters Figure 7, passes gate 340 (MC10101), sets flip-flop 342 (MC10131), and enters flip-flop 344 (MC10131) to cause the generation of a GO6 output. This occurs without any need for a TESD signal entering Figure 7. Again one should remember that both ends contain my complete circuitry. The GO6 enters the B end sending circuitry of Figure 3, which operates as before described except that the message is limited to a count of 6, consisting of a SYNC bit, a =1 bit, the two mode bits, plus two "bits" which are insignificant and have no meaning. The two mode bits from the B end Figure 6 circuitry are established by the RM=2 input thereto. (Since =A is false in Figure 6 at the B end, the effect is that RM=2 controls the mode output of Figure 6 to be Mode 2 for the 6 bit transmission back to the A end.) The flip-flop 342 in the B end Figure 7 circuitry is cleared by the channel latch CHLA signal from B end Figure 3 circuitry, which also operates at the B end as described for the A end. Flip-flop 344 of Figure 7 is cleared at the count of 6 from the B end Figure 3 circuitry.

When this 6 bit message is received at the A end, passing through A end Figures 9, 10 and 11 circuitry, the A end uses solely the mode bits of it to create for the computer an acknowledgment input that causes the computer to believe that the peripheral device itself has sent a "service in" message, even though the message is not one from the peripheral device. The A end does that by using the RM2 output from the A end decoder 232 (Figure 10), which enters the A end multiplexer switch 320 (Figure 9), passes to gate 252 and exits as RR at the count of 6 at the A end. Then the A end circuitry of Figure 8 is employed, with the RM2 signal entering flip-flop 366 (MC10131) and gate 370 (MC10105), and RR entering flip-flop 366 on clock. The resulting signal from gate 370 goes to flip-flop 362 (MC10131) and out as an SI signal. That signal SI enters the multiplex switch 352 (MC10173) at the A end Figure 10 circuitry, which emits a signal to selector switch 234 at the A end. Switch 234 is capable of operation in any mode, i.e., the RM=1 input does not negate action in other modes. The result at the A end is that the output MS of switch 234 is actually a "modified service in", which enters switch 247 of Figure 11 and passes to the computer, where it is received and interpreted as "service in" response from the peripheral.

Now, the computer is willing to release a byte of WRITE and does so; but before considering that, some additional details for the A end in Mode 2 should be covered.

Note that the M2 line of Figure 6 is connected to the M2 line in Figure 4, effectively causing a NOR condition for gate 143 and effectively blocking any "suppress" bits on line 16L from passing gate 138. The WRT4 signal entering Figure 4 from Figure 5 similarly blocks any "command" bits on line 12L from passing gate 137, for so long as the Mode 2 (or Mode 3) condition is maintained. (In Mode 3, the WRT4 input would be RED 4.)

Referring to Figure 5, the behavior caused there by WRT4 at the A end will be explained. Of course, there is no WRT4 at the B end. (Pertinent circuits there are controlled by Mode 2 signals and derivatives thereof.) The WRT4 setting passes through a flip-flop 192 (Dual type D master-slave, MC10131) on each signal LESD from the line marked LESD exiting gate 185 of Figure 4. (The LESD is an activator to cause

the GO12 signal for each Mode 2 transmission.) At the A end, the significance of LESD may be taken as "Leading Edge of Service Out Data Out." In this circuit there is an OR/NOR gate 193 (MC10105), another OR/NOR gate 194 (MC10101), and a flip-flop 195 (MC10131) from which two signals exit, namely a WRT6 and GO12. The GO12 goes to the input of identical marking in Figure 3. The symbol Fl in Figure 5 signifies an input which when true, signifies to the A end that buffer registers at the B end are not totally full (i.e., that space is available) and such significance at the A end allows the A end to transmit a 12 bit message of WRITE, which is passed into buffer registers at the B end. An Fl signifying full buffer registers at the B end will prevent the A end from sending in Mode 2 until an Fl "true" signal is generated at the A end.

The GO12 in Figure 3 initiates the transmission in a manner comparable to that described for the GO24 transmission, except that transmission in Mode 2 is limited to 12 bits per message. The WRT4 (from Figure 5) with clock release by LESD (from Figure 4) goes to flip-flop 196 (MC10131) of Figure 3. Flip-flop 196 provides a control signal for the channel latch signal 102, which signal is cancelled at the count =12 out of Translator 153. Flip-flops 148 and 196 in Figure 3 suitably may function on an "or" basis for the channel latch signal of line 102. (The WRT6 output in Figure 3 could, for high or highest speed transmission, be the input replacing the constant enabling WRT4 to flip-flop 196, if desired.)

Explanation of the remainder of Figure 5 as to Mode 2 transmission as well as the significance of WRT4 in Figure 10 and other happenings in Mode 2 at the transmitting end are best accomplished after discussing some happenings at the receiving end.

Referring to Figures 9 and 10, initial happenings in Mode 2 at the B end beyond those covered above for generation at the B end first 6 bit "acknowledgment" will be covered. At the B end, the Mode 2 signal released from flip-flop 311 (Fig. 10) by the RR input is referred to as RM=2, as distinguished from RM2 which is the signal of receipt in Mode 2. The B end RM=2 signal is generated at the upper output of OR/NOR gate 312 (MC10105). One should be reminded that this delayed RM=2 signal allows the first Mode 2 message which is 24 bits (i.e., for fall of service out) to be fully received at B end before changing modes. Also a delayed signal RM2X is generated from the flip-flop 311 for each byte of Mode 2 message.

The signal RM2X enters Figure 9 in a multiplex switch 320 (MC10173). It sets that switch and effectively thereafter limits the count to 12 bits for so long as Mode 2 is maintained at the B end. When the count of 12 enters gate 252 from the translator gate 226 of the counter, a signal goes out line 253 to Go Receive 213 to stop the Receive Counter 220. At the same time, the RR signal from gate 252 is generated.

The RM=2 signal from gate 312 (Figure 10) entering Figure 9 at OR/NOR gate 324, causes the signal =BM2, earlier mentioned. This signal =BM2, apart from its function earlier mentioned, enters Figure 11 as the signal controlling the switches 245, 246 and 247, effectively causing subsequent data of Mode 2 (12 bits) to enter the buffer registers (all MC10176) instead of allowing subsequent Mode 2 data (after the special 24 bit mode setting communication) to by-pass the buffer registers.

The signal RM2X from flip-flop 311 (Figure 10) goes to Figure 11 and enters the lower second set buffer register BR2. (The RM2X of each Mode 2 receipt does this.)

Further, control for shifting all 12 bit WRITE data through the buffer registers of BR1 through BR12 of Figure 11 is initiated. How this is done requires reminder that the entire circuitry is present at both ends. The control or recognition at the A end as to the availability of buffer space at the B end is best understood after knowledge of what is happening as WRITE mode "bytes" (of 12 bits) are received at the B end. At that B end, RM=2 of Figure 10 and the RR signal from Figure 9 are entered (Fig. 5) at the multiplexer switch 330 (MC10173) and provide output signals X and Y which at the receiving or B end circuitry enter flip-flop 331, also labeled F1, at about middle left of Figure 11. All flip-flops F1 through F12 are master-slave (MC10131); all gates G2 through G12 are triple input OR/NOR (MC10105) and all return gates marked ON are Quad OR/NOR (MC10101). What happens is that the X and Y signals at the B end set F1 to indicate register BR1 is full. But if BR2 is empty and BR1 full, a pulse is generated which causes gate G2 to open the Buffer Register BR2 for data from BR1 to move into it, or shift or transfer data from BR1 to BR2. This simultaneously causes clearance of flip-flop F1 to indicate that buffer register BR1 is capable of receiving data and sets F2 indicating BR2 is full. The signal from G2, opening BR2 for data, also sets master-slave flip-flop F2 on clock causing G3 to permit the data to shift from BR2 into BR3 (if empty) and clear F2, etc., until the initial data is transferred into Buffer Register BR12, at which time a pulse from G12 sets F12 to indicate that the data has entered BR12 and that BR12 is full.

Simultaneously, while the foregoing shift of data through the buffer registers at the B end is taking place, the A end circuitry of Figure 11 is, to a limited extent, duplicating the B end. Specifically, at the A end, the input in Figure 5 to selector or multiplex switch 330 (MC10173) is a constant =1 (i.e., an "open" line) and the signal for a 12 bit transmission from flip-flop 195. The output X and Y at the A end enters F1 flip-flop 331 (Fig. 11) at the A end and goes through the flip-flops F1 through F12, essentially duplicating their action at the B end, but without data in the A end buffer registers (which may be omitted, if desired). This is done at the A end solely for the purpose of keeping track of buffer register available space at the receiving end, for reasons which will be evident below.

At this time, some additional features of the B end in Mode 2 should be explained.

Referring to Figure 10, gates 314 and 315 as well as 255 are all OR-AND/OR-AND INVERT (Dual 2-wide 2-3-Input, MC10117). Gates 316 and 317 are OR/NOR gates (Quad, MC10101). Flip-flops 228, 313, 318 and 319 are dual type B master-slave flip-flops (MC10131). The multiplexer switches or selectors 234, 350 and 352 are all Quad 2-Input multiplexer latches (MC10173).

In Figure 11, gate 334 is an OR/NOR gate (MC10105); gate 335 is also OR/NOR (MC10101); and flip-flop 336 is master-slave (MC10131).

As data is passed to the last rank BR12 buffer, the pulse from G12 passes an ON gate to set F12, but not on clock, and passes through gates 334 and 335 to set flip-flop 336, which may be considered the thirteenth in the flip-flop series. Flip-flops F12 and 336 remain set until the action by the peripheral device causes them to be cleared, as follows: A "service in" request for a byte by the peripheral (entering the B end circuitry of Figure 4) generates LESD. (Recognize, as will be evident, that both the leading edge and trailing edge of service or data are significant signals for the B end operation adjacent the peripheral device.) The LESD enters the flip-flop 336 and clears it by clocking ground into it. It is the clearing of this flip-flop 336 from its set condition (which reflects data in BR12)
that effects a signal back to gate 334 which temporarily
causes zero entry to flip-flop 336 and a signal in line
376. (Recognize that a GO24 sent message would clear
the senders flip-flop 336). The signal in line 376
enters Figure 10 at gate 314, passes through gate 315,
and then clocks out a signal response to the request by
the peripheral from flip-flop 318, namely a MSB signal
signifying "service out", or a statement that your
"byte" is hereby supplied. This signal will be further
explained. It is generated at the B end from the
peripheral's request, that is the peripheral's signal is
turned back to it in the form of a signal which it
accepts as one from a computer, namely, "service out".
Nearly simultaneously, the gate channel signal GCH (Fig.
10) for delivery of a byte from BR12 to the peripheral
is also generated by my B end logic handling the
peripheral's request. At this point we must also
recognize that the request by the peripheral which
generated LESD in Figure 4 also was effective to
generate the SI signal (shown in a diamond) in
Figure 4. That SI signal enters the B end circuit at SI
(in a diamond) in Figure 10, passes gate 316 and is
ready for the clock release caused by the signal in line
376 passing through gates to flip-flip 318. The output
MSB from flip-flop 318 is effectively a "service out"
signal for the peripheral. (Had the peripheral made a
request by "data in", effective response to it as "data
out" would be generated as MDB in flip-flip 319, in a
manner comparable to that of the service request.) The
"service out" together with the data in BR12 are gated
as aforenoted and accepted into the peripheral; and the
peripheral acknowledges by dropping its "service in",
which causes a TESD operation in the B end circuitry of
Figure 4. (Remember that the sending circuitry discussed above is not just interfaced with the computer, but also the peripheral.)

The TESD at the B end then causes two important events. One is that it enters the circuitry of Figure 7 to cause a 6 bit transmission of acknowledgment to the A end; that will be explained below. The other is that the TESD so generated at B enters the B end Figure 10 at selector switch 350 and goes back through line 372 to F12 to clear F12 in Figure 11 by clocking ground into it. (The RM=2 input to selector gate 350 causes constant enabling signal of Mode 2 through line 374 to F12.) This clearing of F12 merely confirms that the byte in BR12 has been taken by the peripheral. Immediately, the gate G12 pulses and allows data in BR11 into BR12 and effectively sets F12 and also flip-flop 336. The next normal step for the peripheral is to raise its "service in", that is, request another byte, and it does so. The process just noted is then repeated and repeated until the data shifting through the buffer registers on a first-in/first-out basis is taken by the peripheral. At that point, flip-flop 336 will not be set. Thus, any request LESD will not effect any signal out line 376 of Figure 11.

Significantly, as each data byte is moved through the buffer registers, the RM2X signal from flip-flop 311 of Figure 10, for each byte, passes with the byte through the buffer registers and exits BR12 as RM2Y. The signal RM2Y enters Figure 10 at flip-flop 313. Thus, the RM2Y of each byte sets flip-flip 313; and G13 off gate 334 then clocks it out or clears flip-flop 313 of the RM2Y for the byte at the time the peripheral empties or takes the byte from BR12. Significantly, the pulse G13 from gate 334 in Figure 11 clears flip-flop 313 and that flip-flop is left clear when the buffers are clear of data. Note also that gate 312 of Figure 10 maintains a Mode 2 output of RM=2 if either flip-flop 313 or 311 are set.

It will be appreciated that a computer adjacent the A end may well finish its WRITE to a peripheral before all bytes of Mode 2 have been removed from the buffer registers by the peripheral. At that point the computer may signify its completion by raising "command out", which will effectively remove the A end from Mode 2 into Mode 1 and generate a 24 bit transmission to the B end. This could put the B end in danger of losing data but for the aforenoted control of its Mode 2 condition until it empties the buffer registers. But even that control can be dominated by a computer command; and to prevent that occurrence, the command line C12 in buffer 242 is connected to gate 249 (MC10117) in Figure 11 instead of directly to a receive level converter RLC. The B end input to that gate of =BM2 (which is from the output of the gate 324 of Figure 9 having an RM=2 input) stops the command out from passage until the peripheral completes its work in getting the data from the buffer registers. At that point or in case of previously detected error the peripheral sends out "status in", or ST, at the B end (see Figure 4); and that signal of ST is passed to gate 249 of Figure 11 where it cancels the Mode 2 signal and allows the command out signal from the computer to pass to the peripheral; and then B end circuitry reverts to Mode 1.

Before returning to the A end for Mode 2 happenings, mention should be made of the second important event caused by the TESD at the B end, where the leading and trailing edge of service or data output from the peripheral effectively causes successful B end operation. The second important event is that of generating an acknowledgment back to the A end. The acknowledgment is one of only 6 bits, as aforenoted, but is generated differently from the first "service in"
acknowledgment.  The TESD enters the Figure 7 flip-flop
344 on clock and, since that flip-flop has been set by
=BM2, the GO6 output causes the 6 bit transmission to
the A end.  Only the two mode bits of Mode 2 set by =BM2
are significant, as in the case of the special first
Mode 2 acknowledgment from the B end.  It is important
to recognize that the B end sends an acknowledgment of
this type for every byte it takes from the BR12 bank of
buffer registers.

At the A end, these acknowledgments during
Mode 2 permit monitoring by the A end of the status of
buffer space at the B end.

While buffer registers are not necessary at the
A end, the control circuitry of F1 through F12 in
Figure 11 is at least duplicated at the A end.  Thus, as
each Mode 2 message is transmitted from the A end, the A
end output of selector switch 330 of Figure 5 (governed
by inputs of =1 or opening and GO12) enters the A end F1
flip-flop F1 (see Figure 11) just as occurs at the B
end.  As at the B end, the gating to and sequential
setting and clearing of flip-flops at the A end takes
place through to F12, with flip-flops F12 and those
behind it set in parallel with flip-flops of the same
designation at B.

An F1 output (signifying clear) from flip-flop
331 at the A end is required as an input to gate 193 of
Figure 5 to enable that gate before the A end will send
a GO12 signal for a WRITE message to the B end.  (The
LESD from Figure 4 for each WRITE message the computer
is about to send is a clocking input to flip-flop 192
for that sending circuit; but availability of buffer
register space by the F1 input is required before a
transmission of GO12 is ordered.)  Without knowledge as
to buffer availability at the B end after twelve bytes
or messages of WRITE, the A end could be stalled.  The needed knowledge for the A end is gained from the 6 bit
acknowledgments from the B end. Upon receipt at A, the
RR signal so generated enters the A end selector 350 of
Figure 10 which also has the WRT4 input of the A end.
The WRT4 maintains the Mode 2 condition for selector 350
at the A end just as RM=2 does at the B end. It is the
RR signal at the A end, on receipt of each 6 bit
acknowledgment from B, that clocks clearing of F12 at
the A end (through line 372 of Figures 10 and 11) and
allows shift of intelligence from each lower flip-flop
in the series into the next higher. Thus, the
availability of buffer space at B is monitored at the A
end and permits great time saving. Transmission from A
to B and vice versa (e.g., 12 bit WRITE bytes and 6 bit
acknowledgments) can take place simultaneously since
different lines are preferably employed; and each end
contains logic used to maintain operation of the
external devices by converting their own signals into
ones each "believes" is from the other.

To satisfy an external computer's requirement
for a "service in" or "data in" communication (as from a
peripheral unit) before a byte is released by it, I
employ a special circuit illustrated in Figure 8 to
generate response to the computer from the computer's
own output. The circuit consists of flip-flops 360, 362
and 364 (MC10131) and a gate 368 (MC10117). Flip-flop
360 is equipped with a circuit shown in the drawing as
having a conventional switch (left open in the
drawing). In the condition shown in the drawing, but
with the switch closed, flip-flop 360 toggles between
service and data, that is, causes the output of SI and
DI, as shown at the right in Figure 8. But if that
switch were open, the output of flip-flop 360 would not
set flip-flop 364 and thus would cause SI, or "service
in", repetitively. This circuit is used at the A end,
with the inputs RR, RM3 and RM2 all coming from the A end receive circuit of Figures 9 and 10, with WRT6 coming from Figure 5, and with M2 from Figure 6. Note that RM2 from Figure 10 and WRT6 from Figure 5 are the significant gate 368 inputs for Mode 2 operation, and that RM2 is a constant or set condition. Thus, on sending a 12 bit Mode 2 WRITE, the signal WRT6 gated signal to the flip-flops of Figure 8 effectively causes the SI and DI outputs, which enter the selector switch 352 of the A end and generate the MS and MD signals from selector 234 (Fig. 10). Those signals are passed back to the computer through its switch 247 (which does not get any input control of =BM2 at the A end) and through the applicable receive level converter at the A end. Clearance of flip-flops 362 and 364 of Figure 8 occurs then when the next message is sent, at the LES and LED signals from the A end Figure 4. The essential point is that Figure 8 circuitry is specialized and adjustable to provide whatever return signal is needed to satisfy the demands of an external computer for continued release of bytes or messages. The circuit generates the return signal using the computer's output, which initiates action by my A end sending circuitry. The arrangement permits a computer to send WRITE message bytes as fast as it can, limited only by the availability of buffer receipt. In this respect, more buffers than illustrated (or less) may be employed.

As emphasized above, the speed of A end operation in Mode 2 is especially significant; and the sending circuitry of Figure 3 with counting and GO12 operation (from Figure 5) as well as count clearance (for flip-flops 195 and 196 of Figures 5 and 3) all operating at an optimum rate consistent with the noted input controls.

Some other observations are: Gates 314 and 315 (Figure 10) for channel latch at the A end are not necessary. The channel latch at the A end is essentially wide open at the A end in both Mode 2 and Mode 3. Most computers are capable of greater speed than peripheral devices. Also in Figure 10, observe that the line from the upper mode bit just before decoder 232 and extending to gate 255 is a line which always carries bits indicating either Mode 2 or Mode 3, controlling passage at gate 255 (MC10117).

Mode 3 operation will normally be established at the end of my logic adjacent a computer. The steps are analogous to those for establishing Mode 2, as discussed above and illustrated in Figure 5. In mode 3, at the "fall" of service establishing it, where RED4 input is made in the mode setting circuit of Figure 6, the B end's receipt of the 24 "bit" establishing transmission is held by flip-flop 228 (Figure 10) in a manner analogous to that explained for flip-flop 311 for Mode 2. The output RM=3 arises on RR time, that is after the 24 count (Figure 9). This puts the B end in readiness for sending its READ messages, which are mode established by the inputs RM=3 in Figure 6. Since computers are normally faster than peripherals, use of buffers for receipt at the A end is unnecessary.

In Mode 3, as soon as the peripheral starts its first message, which generates SI and DI (Figure 4), a reply at the B end is generated (see SI and DI in Figure 10 and the RM=3 for gate channel GCH) and sent right back to the peripheral; and this proceeds during the peripheral's sending of READ messages to the computer.

All Mode 3 messages are 12 bits in length. The RM=3 (from Figure 10) input at gate 324 (Figure 9) provides a signal =BM3 which sets the B end flip-flop 400 (MC10131) of Figure 4 for clocked sending on LESD. The GO12 and clear =12 operate as before discussed in the circuit of Figure 3.

At the A end, received messages of Mode 3 are processed through the circuit of Figure 9, with selector input RM3 (from Figure 10) setting the 12 count. The Figure 8 circuit, with RM3 input to gate 368 being the enabling input, provides the missing SI "bits" (and if needed, the DI bit) for the computer; and these are generated in RR time, that is, the RR input from Figure 9 at A end. They enter selector 352 and go out as MS and MD, gated on RR time (Figures 10 and 11).

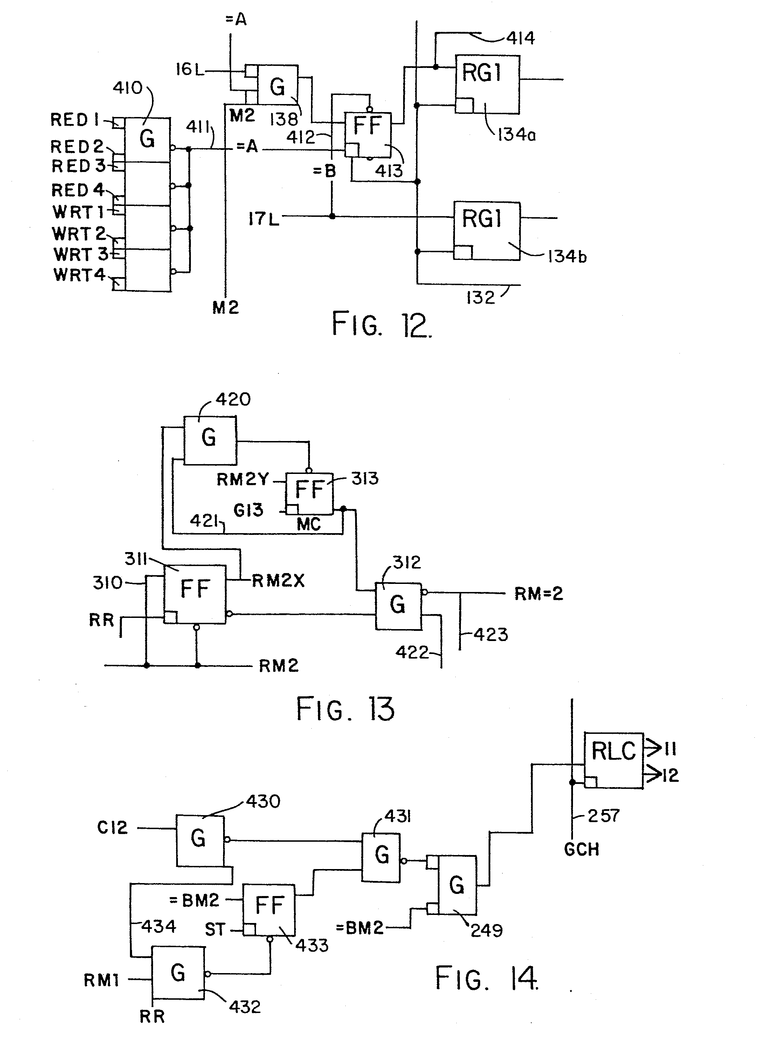

Refer now to Figure 12, which shows replacement circuitry for the lower left of Figure 4. The Figure 12 circuitry is very effective in stopping a computer's suppress signal of line 16L from propagating into the first bank registers RG1 when the transition is taking place to a Mode 2 condition. The circuitry of Figure 4 is also effective to do so, but only when or after WRT4 from Figure 5 has been set to cause an M2 signal. Figure 12 circuitry is an improvement in that it is effective to stop a suppress in line 16L at any stage during the transition to the WRITE or READ condition.

Figure 12 circuitry, at the A end, has a gate 410 (dual 2-wide 2-3-input "OR-AND/OR-AND-INVERT", MC10117) whose inputs labeled RED1 through RED4 inclusive and WRT1 through WRT4 inclusive are from the respective outputs of like labeling in Figure 5. All output from the gate goes through line 411 to a clock input of flip-flop 413 (a dual type D master-slave flip-flop, MC10131). Recognize also that the flip-flop receives clocking input from line 132; and that line also carries clocking for the shift through the registers RG1 and RG2 to the comparator as shown in Figure 4. Further at the A end, the output of gate 138 is passed to the flip-flop 413. In the normal Mode 1 condition, with no line 411 input to flip-flop 413, that output from gate 138 passes directly through flip-flop 413 to the first bank registers RG1. But in the transition condition toward READ or WRITE, output from gate 410 blocks passage of any signals through flip-flop 413 from gate 138.

The arrangement of the Figure 12 circuitry at the B end or B box employs a peripherals incoming signal on line 17L to pre-set flip-flop 413. This, in essence, forces any "request in" entering line 16L from any peripheral into a false condition, a feature especially desirable when multiple peripherals are serviced at the B end. In effect, an "operational in" signal of line 17L prevents any "request in" on 16L from passage through the flip-flop 413. This is especially important where two different peripherals are serviced by the B box circuitry. Thus the "operational in" peripheral is effectively the controlling peripheral to stop any "request in" signal from the other. The purpose of Figure 12 circuitry is to not only stop any "request in" from generating a GO24 signal, but also to make sure that the computer at the other end or A end does not see any "request in". That feature is effectively accomplished by forcing any "request in" to zero. In this respect, it is important to recognize that the circuitry of Figure 2 is somewhat modified at the B end as follows: Specifically, line 16 (Figure 2) after leaving the level converter labeled LC is broken or removed between the joining of 16L to it and the multiplexer 110. In replacement for the line 16 input to the multiplexer is a line labeled 414 in Figure 12. Thus, line 414 is fed as a substitute line 16 to the multiplexer 110 at the B end, with the result that any "request in" signal on line 16L by any alternate peripheral is fed through as a zero.

Refer now to the circuitry of Figure 8, which operates at the A end to provide the computer with "service in" SI and "data in" DI signals that are missing in the Modes 2 and 3 transmissions from the B end, and that are also missing between bytes of Mode 2 transmission from the computer end to buffer storage at the B end. That circuitry needs but slight modification in order to make it more effective or to improve it for operation at lower speeds. Recall that the B end box itself, not the peripheral, initiates the first Mode 2 acknowledgment back to the computer; and that first acknowledgment is generated by the signal =BM2 from gate 324 of Figure 9 after the RM=2 signal of Figure 10 is generated at the B end. That =BM2 signal enters Figure 7 to trigger the first GO6 acknowledgment back to the A box. It lacks any "service in" SI bit. In the A box, receipt of that short 6-bit acknowledgment is such that on decoding (Figure 10) the flip-flop 311 generates a signal RM2X. One improvement for Figure 8 is to use the signal RM2X as a replacement of the RM2 input to flip-flop 336 in Figure 8, and not use the RR input to flip-flop 336. As soon as that RM2X signal goes through flip-flop 366 and gate 370 and flip-flop 362, the SI or first "service in" signal is generated for the computer at the A end. Simultaneously, when that first "service in" signal is generated, a bleedoff of it in a line (not shown in Figure 8) is passed back to the clock input of flip-flop 366 (in replacement of the RR input for flip-flop 336). The result is that the flip-flop 366 is set or cleared and made ready for another RM2X.

A still further improvement in the circuitry of Figure 8 for the A end is that of a substitution of trailing edge of service or data, TESD, for the WRT6 input to gate 368. The TESD input comes from the output of like labeling in Figure 4, and is generated at the A end as the Mode 2 messages are sent for filling the buffer registers at the B end. This improvement slightly slows down the "service in" or SI response generated by the Figure 8 circuit for sending back to the computer. The WRT6 input to gate 368 tends to cause the SI to occur too fast and allows the computer to change data in some instances. The noted improvement does not allow the sending of the next "service in" until the transition or "service out" drop. In effect, the fragmentarily delayed "service in" signal accomplished by employing TESD instead of WRT6 as an input to gate 368 slows response to the computer sufficiently so that there is no improvident change of data for any single byte.

Referring to Figure 13, the added circuitry option there illustrated for the upper left of Figure 10 contributes to a forcing of a preset of Mode 2 condition in flip-flop 313 at the beginning of Mode 2 or the WRITE condition. Gate 420 (MC10105) receives the RM2X input from flip-flop 311 at the start of Mode 2. In this circuit, when flip-flop 311 is set and flip-flop 313 is clear, the RM2X output through line 421 forces flip-flop 313 to set; and as soon as it is set the condition for its setting is removed. The circuit contributes to maintenance of the RM=2 output at gate 312.

Refer now to Figures 10 and 11: a further improvement is to entirely remove the line 376 from gate 334 of Figure 11 to gate 314 of Figure 10, and thus in essence remove the G13 type signal from passing from gate 334 to gate 314. At the B end this, in essence, causes the peripheral to look at the last buffer at all times in Mode 2. At the A end, line 376 is unnecessary. In essence, the removal of line 376 functions to provide no gating of channels for external device receipt in Mode 2 condition.

In Figure 14, the further improvement illustrated can be looked upon as in essence providing new circuitry for the inputs to gate 249 of Figure 11. In Figure 14, gates 430, 431, and 432 are all triple 2-3-2 input OR/NOR gates (MC10105); and flip-flop 433 is a dual type D master-slave flip-flop (MC10131). As before, =BM2 functions to block passage of a line C12 signal in Mode 2. But, if the condition arises in Mode 2 that a peripheral raises "status in" ST (see Figure 4), the ST will set flip-flop 433. That setting combined with gate 431 will effectively continue to prevent any incoming C12 signal (such as Command Out) from going to the peripheral during Mode 2. Once flip-flop 433 is set, it will only clear on Mode 1, on the RR input to gate 432 after that gate receives input of RM1, and absence of Command Out.

A multitude of applications exist for the essential principles of my invention beyond those particularly described in connection with the preferred specific embodiment illustrated in the drawings. Various combinations and subcombinations may be employed to enhance distance communication without departing from the essential principles disclosed. Equivalents known and developed hereafter may be employed for different positions or subcombinations disclosed without departing from the essential principles; and in this respect the claims appended hereto and made a part of this specification should be construed as broadly as consistent with their validity.

0122870

- 52 -

THAT WHICH IS CLAIMED:

1. A logic system between parallel channel external devices for serially transmitting digital data between opposite ends of said logic system located adjacent said external devices, comprising means at the first end of said logic system for converting parallel data into serial form for transmission to the second end of said logic system, buffer means at the second end of said logic system for temporarily storing digital data received at said second end, and means within said first end of said logic system for recognizing when said buffer means at said second end is full.

2. The system of Claim 1 additionally including within said second end means for generating a return signal and means for transmitting said return signal to said first end.

3. The system of Claim 2 wherein said return signal is generated within said second end from a selected portion of a transmission received from said first end.

4. The system of Claim 1 additionally including within said first end means for generating request signals to the external device at said first end until said buffer means at said second end has had stored therein a predetermined amount of digital data.

5. The system of Claim 1 additionally including means for reducing the number of bits in a message of digital data to be transmitted serially.

0122870

- 53 -

6. The logic system of Claim 1 including means to reduce the number of bits in a message of digital data to be transmitted serially and means for generating at the receiving end any control bits required to satisfy operation of the external device at said receiving end.

7. The logic system of Claim 1 including means therewithin for generating at the receiving end a selected signal for a predetermined location in an array of parallel digital signals serially transmitted without said selected signal.

8. The logic system of Claim 1 including means therewithin for employing control signals from an external device to generate signals back to said external device to thereby cause said external device to release or accept digital data.

9. The logic system of Claim 1 including means for returning a control signal from an external device to said external device as a signal sufficiently responsive to said control signal to facilitate release or acceptance of digital data by said external device.

10. The logic system of Claim 1 including means to generate mode digital signals for transmission of digital messages of more than one predetermined length.

11. The logic system of Claim 1 including means actuated by an external device for initiating conversion of parallel data into serial form.

FIG. 1

FIG. 2

0122870

2 / 10

FIG. 3

0122870

FIG. 4

FIG. 5

0122870

FIG.7

FIG. 6

FIG. 8

FIG. 9

0122870

FIG. 10

0122870

FIG. 11

FIG. 12.

FIG. 13

FIG. 14.